# EUROPÄISCHE PATENTANMELDUNG

(11) **EP 4 825 703 A1**
(43) Veröffentlichungstag der Anmeldung: **21.10.2026**
(21) Anmeldenummer: 26171475.2
(22) Anmeldetag: 09.04.2026
(51) Int. Cl.: B62D 5/04, B62D 15/02

(54) **VERFAHREN UND EINRICHTUNG ZUR BESTIMMUNG EINES LENKWINKELS EINES VORDERRADES EINES FAHRZEUGS, ELEKTRONISCHES GERÄT UND SPEICHERMEDIUM**

(30) Priorität: 14.04.2025 CN 202510464691
(71) Anmelder: ZF Friedrichshafen AG, 88046 Friedrichshafen (DE)
(72) Erfinder: Wang, Xiandong, 88046 Friedrichshafen (DE); Luo, Zheng, 88046 Friedrichshafen (DE)
(74) Vertreter: ZF Friedrichshafen AG

(57) **Zusammenfassung**

Die Ausführungsbeispiele der vorliegenden Anmeldung stellen ein Verfahren und eine Einrichtung zur Bestimmung eines Lenkwinkels eines Vorderrades eines Fahrzeugs, ein elektronisches Gerät und ein Speichermedium bereit. Das Verfahren umfasst: Erfassung dynamischer Information und stationärer Information des Fahrzeugs zum aktuellen Zeitpunkt, wobei die dynamische Information ein Fahr- und Lenkverhalten des Fahrzeugs und die stationäre Information ein stationäres Gierverhalten des Fahrzeugs charakterisiert; Bestimmung erster Lenkinformation des Fahrzeugs gemäß der dynamischen Information und Bestimmung zweiter Lenkinformation des Fahrzeugs gemäß der stationären Information, wobei die erste Lenkinformation und die zweite Lenkinformation jeweils einen geschätzten Lenkwinkel des Vorderrades des Fahrzeugs charakterisieren; und Bestimmung von Information über einen Lenkwinkel des Vorderrades des Fahrzeugs zum aktuellen Zeitpunkt gemäß der ersten Lenkinformation und der zweiten Lenkinformation. In Verbindung mit Schätzwerten zweier Arten von Lenkwinkeln des Vorderrades erhöht das Verfahren die Präzision der Bestimmung des Lenkwinkels des Vorderrades.

## Beschreibung

### Technisches Gebiet

Die vorliegende Anmeldung betrifft das Gebiet der künstlichen Intelligenz, insbesondere ein Verfahren und eine Einrichtung zur Bestimmung eines Lenkwinkels eines Vorderrades eines Fahrzeugs, ein elektronisches Gerät und ein Speichermedium.

### Stand der Technik

Ein Lenkwinkel eines Vorderrades ist ein wichtiger Parameter während des Fahrens eines Fahrzeugs, der die Fahrrichtung des Fahrzeugs direkt beeinflussen und die Trajektorie des Fahrzeugs steuern kann.

Wenn der Lenkwinkel des Vorderrades nicht genau gemessen werden kann, kann dies zu einer Unter- oder Übersteuerung führen und somit entsteht eine Bedrohung für die Fahrtsicherheit. Insbesondere wenn ein SBW (Steering By Wire)-System ausfällt, kann die Lenkung des Vorderrades des Fahrzeugs nicht genau erkannt werden und dies beeinflusst die Fahrsicherheit.

### Offenbarung der Erfindung

Die Ausführungsbeispiele der vorliegenden Anmeldung stellen ein Verfahren und eine Einrichtung zur Bestimmung eines Lenkwinkels eines Vorderrades eines Fahrzeugs, ein elektronisches Gerät und ein Speichermedium bereit, um die Präzision der Bestimmung eines Lenkwinkels eines Vorderrades zu erhöhen.

In einem ersten Aspekt stellt ein Ausführungsbeispiel der vorliegenden Anmeldung ein Verfahren zur Bestimmung eines Lenkwinkels eines Vorderrades eines Fahrzeugs bereit, das umfasst:
Erfassung dynamischer Information und stationärer Information des Fahrzeugs zum aktuellen Zeitpunkt, wobei die dynamische Information ein Fahr- und Lenkverhalten des Fahrzeugs und die stationäre Information ein stationäres Gierverhalten des Fahrzeugs charakterisiert;
Bestimmung erster Lenkinformation des Fahrzeugs gemäß der dynamischen Information und Bestimmung zweiter Lenkinformation des Fahrzeugs gemäß der stationären Information, wobei die erste Lenkinformation und die zweite Lenkinformation jeweils einen geschätzten Lenkwinkel des Vorderrades des Fahrzeugs charakterisieren; und
Bestimmung von Information über einen Lenkwinkel des Vorderrades des Fahrzeugs zum aktuellen Zeitpunkt gemäß der ersten Lenkinformation und der zweiten Lenkinformation.

In einem zweiten Aspekt stellt ein Ausführungsbeispiel der vorliegenden Anmeldung eine Einrichtung zur Bestimmung eines Lenkwinkels eines Vorderrades eines Fahrzeugs bereit, die umfasst:
eine Informationserfassungseinheit, die zur Erfassung dynamischer Information und stationärer Information des Fahrzeugs zum aktuellen Zeitpunkt dient, wobei die dynamische Information ein Fahr- und Lenkverhalten des Fahrzeugs und die stationäre Information ein stationäres Gierverhalten des Fahrzeugs charakterisiert;
eine Lenkbestimmungseinheit, die zur Bestimmung erster Lenkinformation des Fahrzeugs gemäß der dynamischen Information und Bestimmung zweiter Lenkinformation des Fahrzeugs gemäß der stationären Information dient, wobei die erste Lenkinformation und die zweite Lenkinformation jeweils einen geschätzten Lenkwinkel des Vorderrades des Fahrzeugs charakterisieren; und
eine Lenkwinkelbestimmungseinheit, die zur Bestimmung von Information über einen Lenkwinkel des Vorderrades des Fahrzeugs zum aktuellen Zeitpunkt gemäß der ersten Lenkinformation und der zweiten Lenkinformation dient.

Gemäß einem dritten Aspekt stellt ein Ausführungsbeispiel der vorliegenden Anmeldung ein elektronisches Gerät bereit, das umfasst: einen Speicher und einen Prozessor,
wobei in dem Speicher computerausführbare Anweisungen gespeichert sind,
und wobei der Prozessor die in dem Speicher gespeicherten computerausführbaren Anweisungen ausführt, um das Durchführen des Verfahrens nach dem ersten Aspekt durch den Prozessor zu ermöglichen.

In einem vierten Aspekt stellt ein Ausführungsbeispiel der vorliegenden Anmeldung ein computerlesbares Speichermedium bereit, wobei in dem computerlesbaren Speichermedium computerausführbare Anweisungen gespeichert sind, die bei ihrem Ausführen durch einen Prozessor zur Implementierung des Verfahrens nach dem ersten Aspekt verwendet werden.

In einem fünften Aspekt stellt ein Ausführungsbeispiel der vorliegenden Anmeldung ein Computerprogrammprodukt bereit, das ein Computerprogramm umfasst, das bei seinem Ausführen durch einen Prozessor das Verfahren nach dem ersten Aspekt implementiert.

Die Ausführungsbeispiele der vorliegenden Anmeldung stellen ein Verfahren und eine Einrichtung zur Bestimmung eines Lenkwinkels eines Vorderrades eines Fahrzeugs, ein elektronisches Gerät und ein Speichermedium bereit. Durch die Erfassung der dynamischen Information und der stationären Information des Fahrzeugs können eine dynamische Eigenschaft und ein stationäres Merkmal des Fahrzeugs erhalten werden. Auf der Grundlage der dynamischen Eigenschaft des Fahrzeugs kann ein Lenkwinkel des Vorderrades geschätzt werden. Auf der Grundlage der stationären Eigenschaft des Fahrzeugs kann auch ein Lenkwinkel des Vorderrades geschätzt werden. In Verbindung mit den zwei Schätzergebnissen wird ein endgültiger Lenkwinkel des Vorderrades bestimmt, wodurch die Präzision der Bestimmung des Lenkwinkels des Vorderrades des Fahrzeugs effektiv erhöht und somit eine präzise Steuerung des Fahrzeugs erleichtert wird.

### Kurzbeschreibung der Zeichnungen

Die Zeichnungen hierin sind in die Beschreibung aufgenommen und bilden einen Teil dieser Beschreibung. Dabei zeigen sie die der vorliegenden Anmeldung entsprechenden Ausführungsbeispiele und dienen zusammen mit der Beschreibung zur Erläuterung der Prinzipien der vorliegenden Anmeldung.
Fig. 1 zeigt ein schematisches Flussdiagramm eines Verfahrens zur Bestimmung eines Lenkwinkels eines Vorderrades eines Fahrzeugs nach einem Ausführungsbeispiel der vorliegenden Anmeldung;
Fig. 2 zeigt ein schematisches Flussdiagramm des Verfahrens zur Bestimmung eines Lenkwinkels eines Vorderrades eines Fahrzeugs nach einem Ausführungsbeispiel der vorliegenden Anmeldung;
Fig. 3 zeigt ein schematisches Flussdiagramm des Verfahrens zur Bestimmung eines Lenkwinkels eines Vorderrades eines Fahrzeugs nach einem Ausführungsbeispiel der vorliegenden Anmeldung;
Fig. 4 zeigt eine schematische Strukturdarstellung einer Einrichtung zur Bestimmung eines Lenkwinkels eines Vorderrades eines Fahrzeugs nach einem Ausführungsbeispiel der vorliegenden Anmeldung;
Fig. 5 zeigt eine schematische Strukturdarstellung der Einrichtung zur Bestimmung eines Lenkwinkels eines Vorderrades eines Fahrzeugs nach einem Ausführungsbeispiel der vorliegenden Anmeldung; und
Fig. 6 zeigt eine schematische Strukturdarstellung eines elektronischen Geräts nach der vorliegenden Anmeldung.

In den obigen Zeichnungen sind konkrete Ausführungsbeispiele der vorliegenden Anmeldung dargestellt. Im Folgenden werden diese noch näher beschrieben. Die Zeichnungen und Texte hierhin dienen nicht dazu, den Umfang der Idee der vorliegenden Anmeldung in irgendeiner Weise einzuschränken, sondern dazu, den Fachleuten auf diesem Gebiet den Kontext der vorliegenden Anmeldung unter Bezugnahme auf spezifische Ausführungsbeispiele der vorliegenden Anmeldung zu erläutern.

### Ausführliche Ausführungsformen

Um die Aufgabe, die technischen Lösungen und die Vorteile der vorliegenden Anmeldung deutlicher zu machen, werden die Ausführungsbeispiele der vorliegenden Anmeldung nachfolgend in Verbindung mit den beigefügten Zeichnungen näher beschrieben.

Es sollte verstanden werden, dass die beschriebenen Ausführungsbeispiele nur einige Ausführungsbeispiele anstatt sämtliche Ausführungsbeispiele der vorliegenden Anmeldung darstellen. Alle anderen Ausführungsbeispiele, die vom Durchschnittsfachmann anhand der Ausführungsbeispiele der vorliegenden Anmeldung ohne erfinderischen Aufwand erhalten werden, gehören ebenfalls zu dem Schutzumfang der vorliegenden Anmeldung.

In der nachfolgenden Beschreibung, die sich auf die Zeichnungen bezieht, bezeichnen die gleichen Bezugszeichen in den verschiedenen Zeichnungen die gleichen oder ähnliche Elemente, sofern nichts anderes angegeben ist. Die in den folgenden Ausführungsbeispielen beschriebenen Ausführungsformen stellen nicht alle mit der vorliegenden Anmeldung übereinstimmenden Ausführungsformen dar. Vielmehr handelt es sich dabei lediglich um Beispiele für die Einrichtungen und Verfahren, die mit einigen, in den beigefügten Ansprüchen beschriebenen Aspekten der vorliegenden Anmeldung übereinstimmen.

Es ist zu verstehen, dass in der Beschreibung der vorliegenden Anmeldung die Begriffe "erste", "zweite", "dritte" und dergleichen nur zur Unterscheidung ähnlicher Objekte verwendet werden, ohne dass sie zur Beschreibung einer bestimmten Reihenfolge oder Sequenz verwendet werden müssen und als implizite oder explizite Angabe für die Wichtigkeit verstanden werden müssen. Für den Durchschnittsfachmann kann die spezifische Bedeutung der oben genannten Begriffe in der vorliegenden Anmeldung im Hinblick auf die jeweiligen Umstände verstanden werden. Des Weiteren bezieht sich der Begriff "mehrere" in der Beschreibung der vorliegenden Anmeldung, sofern nicht anders angegeben, auf eine Anzahl von zwei oder mehr als zwei. "Und/oder" beschreibt eine Assoziationsbeziehung, die zugehörige Objekte beschreibt. Dies gibt an, dass drei Arten von Beziehungen existieren können. Beispielsweise kann A und/oder B angeben: das unabhängige Vorhandensein von A, das gleichzeitige Vorhandensein von A und B, und das unabhängige Vorhandensein von B. Das Zeichen "/" gibt im Allgemeinen an, dass die zugehörigen Objekte davor und danach in einer "oder"-Beziehung stehen.

Es ist darauf hinzuweisen, dass aufgrund der Beschränkung der Textlänge nicht alle optionalen Ausführungsformen in der Beschreibung der vorliegenden Anmeldung erschöpfend aufgeführt sind. Nach dem Lesen der Beschreibung der vorliegenden Anmeldung soll es für den Fachmann denkbar sein, dass optionale Ausführungsformen durch beliebige Kombinationen der technischen Merkmale gebildet werden können, solange die technischen Merkmale untereinander nicht im Widerspruch stehen. Nachfolgend werden die jeweiligen Ausführungsbeispiele näher erläutert.

Ein Lenkwinkel eines Vorderrades ist ein wichtiger Parameter für ein Dynamik- und Steuersystem eines Fahrzeugs und liegt den jeweiligen Aspekten des konventionellen Fahrens und des autonomen Fahrens zugrunde. Er spielt eine wichtige Rolle in vielen Aspekten, wie der Gewährleistung der Fahrzeugsicherheit, der Erhöhung der Präzision der Steuerung, der Validierung der Zuverlässigkeit des Systems und der Förderung technologischer Innovationen und dergleichen.

Eine direkte Messung des Lenkwinkels des Vorderrades durch einen Sensor könnte Umweltstörungen, wie schlammigem Wasser, elektromagnetischem Rauschen und dergleichen, ausgesetzt sein. Insbesondere für ein Fahrzeug mit einem SBW-System könnte die Präzision der Schätzung des Lenkwinkels des Vorderrades beim Ausfall des SBW-Systems stark beeinflusst werden, so dass ein großer Schätzfehler des Lenkwinkels des Vorderrades entsteht und somit ein sicheres Fahren des Fahrzeugs beeinflusst wird.

Die vorliegende Anmeldung stellt ein Verfahren und eine Einrichtung zur Bestimmung eines Lenkwinkels des Vorderrades eines Fahrzeugs, ein elektronisches Gerät und ein Speichermedium bereit, um die obigen technischen Probleme im Stand der Technik zu lösen.

Im Folgenden wird anhand konkreter Ausführungsbeispiele detailliert beschrieben, wie die technische Lösung der vorliegenden Anmeldung aussieht und wie die technische Lösung der vorliegenden Anmeldung die oben genannten technischen Probleme löst. Die folgenden konkreten Ausführungsbeispiele können miteinander kombiniert werden, und in einigen Ausführungsbeispielen werden gleiche oder ähnliche Konzepte oder Prozesse möglicherweise nicht wiederholt. Die Ausführungsbeispiele der vorliegenden Anmeldung werden nachstehend in Verbindung mit den beigefügten Zeichnungen beschrieben.

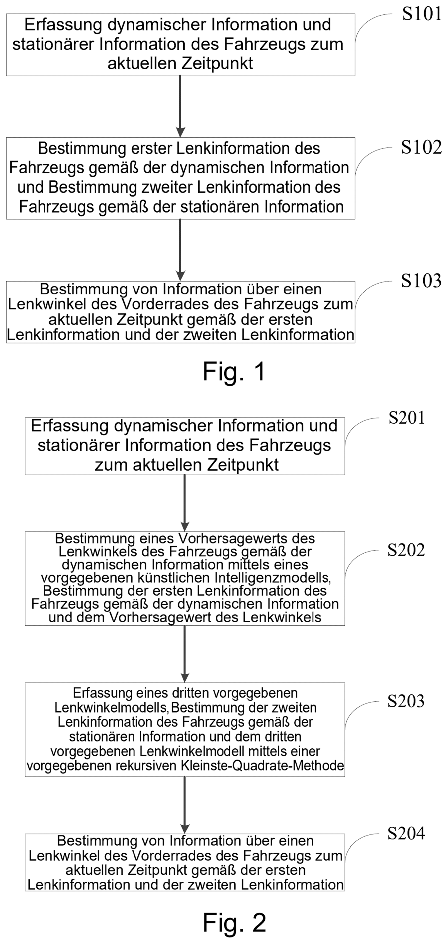

Fig. 1 zeigt ein schematisches Flussdiagramm eines Verfahrens zur Bestimmung eines Lenkwinkels eines Vorderrades eines Fahrzeugs nach einem Ausführungsbeispiel der vorliegenden Anmeldung. Das Verfahren kann durch eine Einrichtung zur Bestimmung eines Lenkwinkels eines Vorderrades eines Fahrzeugs durchgeführt werden. Wie in Fig. 1 gezeigt, umfasst das Verfahren folgende Schritte:
S101, Erfassung dynamischer Information und stationärer Information des Fahrzeugs zum aktuellen Zeitpunkt, wobei die dynamische Information ein Fahr- und Lenkverhalten des Fahrzeugs und die stationäre Information ein stationäres Gierverhalten des Fahrzeugs charakterisiert.

Beispielhaft sind verschiedene Sensoren am Fahrzeug montiert. Beispielsweise können ein Geschwindigkeitssensor, ein Beschleunigungssensor und dergleichen am Fahrzeug montiert sein. Die Sensoren können dynamische Information und stationäre Information des Fahrzeugs während der Fahrt des Fahrzeugs in Echtzeit erfassen. Wenn der Lenkwinkel des Vorderrades des Fahrzeugs geschätzt werden muss, können dynamische Information und stationäre Information des Fahrzeugs zum aktuellen Zeitpunkt erfasst werden.

Die dynamische Information kann das Fahr- und Lenkverhalten des Fahrzeugs charakterisieren. Beispielsweise kann die dynamische Information die Masse des Fahrzeugs, die Fahrgeschwindigkeit, die Beschleunigung, die Gierrate, die Seitensteifigkeit der Vorderachse, die Seitensteifigkeit der Hinterachse und dergleichen umfassen. Die stationäre Information kann das stationäre Gierverhalten des Fahrzeugs charakterisieren. Beispielsweise kann die stationäre Information die stationäre Gierrate, die Fahrgeschwindigkeit und dergleichen umfassen. Die dynamische Information und die stationäre Information können die gleichen oder unterschiedliche Daten umfassen.

S102, Bestimmung erster Lenkinformation des Fahrzeugs gemäß der dynamischen Information und Bestimmung zweiter Lenkinformation des Fahrzeugs gemäß der stationären Information, wobei die erste Lenkinformation und die zweite Lenkinformation jeweils einen geschätzten Lenkwinkel des Vorderrades des Fahrzeugs charakterisieren.

Beispielhaft können Lenkwinkel des Vorderrades des Fahrzeugs jeweils gemäß der dynamischen Information und der stationären Information geschätzt werden. Der gemäß der dynamischen Information geschätzte Lenkwinkel des Vorderrades wird als erste Lenkinformation bestimmt, während der gemäß der stationären Information geschätzte Lenkwinkel des Vorderrades als zweite Lenkinformation bestimmt wird.

Der Algorithmus zur Bestimmung der ersten Lenkinformation und der Algorithmus zur Bestimmung der zweiten Lenkinformation können vorgegeben werden. Beispielsweise werden XYZ-Koordinatenachsen, die auf das Fahrzeug zentrieren, erstellt, wobei es sich bei der X-Achse um die Fahrrichtung des Fahrzeugs, also die Längsrichtung des Fahrzeugs, bei der Y-Achse um die Querrichtung des Fahrzeugs und bei der Z-Achse um eine zur Bodenfläche senkrechte Richtung handeln kann. Die dynamische Information kann die Masse des Fahrzeugs, die Quergeschwindigkeit des Fahrzeugs, das Trägheitsmoment des Fahrzeugs um die Z-Achse, das Trägheitsmoment des vorderen Lenksystems und die Dämpfung des vorderen Lenksystems usw. umfassen. Durch Differentialrechnung der dynamischen Information kann die erste Lenkinformation erhalten werden.

Für die zweite Lenkinformation kann eine Bewegungsbeziehung zwischen der stationären Gierrate und dem Lenkwinkel des Vorderrades vorab erstellt werden. Indem die stationäre Gierrate aus der stationären Information in diese Bewegungsbeziehung eingesetzt wird, ergibt sich der daraus berechnete Lenkwinkel des Vorderrades als die zweite Lenkinformation.

Es ist auch möglich, den tatsächlichen Lenkwinkel des Vorderrades, dynamische Information und stationäre Information des Fahrzeugs in historischen Zeiträumen als Trainingsdaten vorab zu erfassen. Vorab werden ein erstes Modell und ein zweites Modell erstellt, wobei es sich bei dem ersten Modell und dem zweiten Modell um ein neuronales Netzwerkmodell handelt. Es kann sich bei der Eingabe des ersten Modells um die dynamische Information und bei der Ausgabe um die erste Lenkinformation handeln, und es kann sich bei der Eingabe des zweiten Modells um die stationäre Information und bei der Ausgabe um die zweite Lenkinformation handeln. Das erste Modell wird gemäß dem Lenkwinkel des Vorderrades und der dynamischen Information in den Trainingsdaten trainiert. Das zweite Modell wird gemäß dem Lenkwinkel des Vorderrades und der stationären Information in den Trainingsdaten trainiert. Gemäß dem fertig trainierten ersten und zweiten Modell können jeweils die erste Lenkinformation und die zweite Lenkinformation erhalten werden. Im vorliegenden Ausführungsbeispiel sind die Modellstrukturen des ersten Modells und des zweiten Modells nicht konkret definiert.

S103, Bestimmung von Information über einen Lenkwinkel des Vorderrades des Fahrzeugs zum aktuellen Zeitpunkt gemäß der ersten Lenkinformation und der zweiten Lenkinformation.

Nach dem Erhalten der ersten Lenkinformation und der zweiten Lenkinformation können beispielhaft die erste Lenkinformation und die zweite Lenkinformation miteinander verbunden werden. Das heißt, durch die Verbindung der beiden geschätzten Lenkungen des Vorderrades wird der endgültige Lenkwinkel des Vorderrades als Information über den Lenkwinkel des Vorderrades zum aktuellen Zeitpunkt bestimmt, so dass die Schätzung des Lenkwinkels des Vorderrades in Echtzeit realisiert wird.

Beispielsweise können die Gewichtung der ersten Lenkinformation und die Gewichtung der zweiten Lenkinformation vorgegeben sein. Durch die vorgegebenen Gewichtungen werden die erste Lenkinformation und die zweite Lenkinformation gewichtet aufsummiert und somit ermittelt die Information über den Lenkwinkel des Vorderrades im aktuellen Zeitpunkt.

Im vorliegenden Ausführungsbeispiel ist vorgesehen, dass es sich bei der ersten Lenkinformation um ein mittels eines Dynamikmodells des Fahrzeugs erhaltenes Schätzergebnis des Lenkwinkels des Vorderrades und bei der zweiten Lenkinformation um ein mittels eines Kinematikmodells des Fahrzeugs erhaltenes Schätzergebnis des Lenkwinkels des Vorderrades handelt. Durch die Verbindung der beiden Schätzergebnisse wird das endgültige Schätzergebnis des Lenkwinkels des Vorderrades erhalten. Nach der Bestimmung des Lenkwinkels des Vorderrades kann die Fahrrichtung des Fahrzeugs geändert werden und Vorgänge wie Kurvenfahren, Fahrspurwechsel und dergleichen können durchgeführt werden, um das autonome Fahren des Fahrzeugs zu realisieren.

Ein Ausführungsbeispiel der vorliegenden Anmeldung stellt ein Verfahren zur Bestimmung eines Lenkwinkels eines Vorderrades eines Fahrzeugs bereit. Durch die Erfassung der dynamischen Information und der stationären Information des Fahrzeugs können eine dynamische Eigenschaft und ein stationäres Merkmal des Fahrzeugs erhalten werden. Auf der Grundlage der dynamischen Eigenschaft des Fahrzeugs kann ein Lenkwinkel des Vorderrades geschätzt werden. Auf der Grundlage der stationären Eigenschaft des Fahrzeugs kann auch ein Lenkwinkel des Vorderrades geschätzt werden. In Verbindung mit den zwei Schätzergebnissen wird ein endgültiger Lenkwinkel des Vorderrades bestimmt, wodurch die Präzision der Bestimmung des Lenkwinkels des Vorderrades des Fahrzeugs effektiv erhöht und somit eine präzise Steuerung des Fahrzeugs erleichtert wird.

Fig. 2 zeigt ein schematisches Flussdiagramm des Verfahrens zur Bestimmung eines Lenkwinkels eines Vorderrades eines Fahrzeugs nach einem Ausführungsbeispiel der vorliegenden Anmeldung. Wie in Fig. 2 gezeigt, wird auf der Grundlage des Ausführungsbeispiels in Fig. 1 im vorliegenden Ausführungsbeispiel das Verfahren zur Bestimmung eines Lenkwinkels eines Vorderrades eines Fahrzeugs näher erläutert. Das Verfahren umfasst:
S201, Erfassung dynamischer Information und stationärer Information des Fahrzeugs zum aktuellen Zeitpunkt, wobei die dynamische Information ein Fahr- und Lenkverhalten des Fahrzeugs und die stationäre Information ein stationäres Gierverhalten des Fahrzeugs charakterisiert.

Beispielhaft kann dieser Schritt auf den obigen Schritt S101 verweisen und wird hier nicht mehr wiederholt.

S202, Bestimmung eines Vorhersagewerts des Lenkwinkels des Fahrzeugs gemäß der dynamischen Information mittels eines vorgegebenen künstlichen Intelligenzmodells, wobei es sich bei dem vorgegebenen künstlichen Intelligenzmodell um ein vorab erstelltes neuronales Netzwerkmodell handelt und zur Vorhersage des Lenkwinkels des Vorderrades des Fahrzeugs gemäß der dynamischen Information dient; und Bestimmung der ersten Lenkinformation des Fahrzeugs gemäß der dynamischen Information und dem Vorhersagewert des Lenkwinkels.

Beispielhaft ist ein AI (Artificial Intelligence, Künstliche Intelligenz)-Modell vorab erstellt und trainiert. Im vorliegenden Ausführungsbeispiel ist die Modellstruktur des AI-Modells nicht konkret definiert. Die dynamische Information wird in das AI-Modell eingegeben und der Vorhersagewert des Lenkwinkels stellt das Ausgabeergebnis des AI-Modells dar. Das heißt, das AI-Modell kann zuerst den Lenkwinkel des Vorderrades des Fahrzeugs vorhersagen. Anschließend wird die erste Lenkinformation des Fahrzeugs in Verbindung mit der dynamischen Information und dem Vorhersagewert des Lenkwinkels, der durch das AI-Modell vorhergesagt ist, bestimmt. Das heißt, unter Bezugnahme auf den Vorhersagewert des Lenkwinkels des AI-Modells kann die dynamische Information berechnet und somit die erste Lenkinformation erhalten werden, um einen zu großen Fehler der ersten Lenkinformation zu vermeiden und somit die Präzision der Bestimmung der ersten Lenkinformation zu erhöhen.

Um das AI-Modell vorab zu trainieren, wobei es sich bei Eingabedaten des AI-Modells um die dynamische Information und bei Ausgabedaten um den Lenkwinkel des Vorderrades handelt, können somit die zu sammelnden und zu trainierenden Daten tatsächliche dynamische Information des Fahrzeugs zu einem historischen Zeitpunkt und einen tatsächlichen Lenkwinkel des Vorderrades zu diesem Zeitpunkt umfassen. Durch Eingabe der tatsächlichen dynamischen Information in das AI-Modell ergibt sich ein vorhergesagter Lenkwinkel des Vorderrades. Der vorhergesagte Lenkwinkel des Vorderrades wird mit dem tatsächlichen Lenkwinkel des Vorderrades verglichen, um festzulegen, ob das AI-Modell fertig trainiert ist.

Es ist auch möglich, die dynamische Information des Fahrzeugs und den entsprechenden Lenkwinkel des Vorderrades anhand eines vorgegebenen, simulierten Modells zu erzeugen. Beispielsweise kann es sich bei dem vorgegebenen, simulierten Modell um ein simuliertes Modell, das auf der Grundlage eines Steer-By-Wire-Fahrzeugs erstellt ist, handeln. Es kann sich bei den Eingabedaten des simulierten Modells um dynamische Information, die der Benutzer nach tatsächlichen Bedürfnissen einstellt, und bei den Ausgabedaten um den Lenkwinkel des Vorderrades, der gemäß der eingegebenen dynamischen Information ermittelt wird, handeln. Die Eingabedaten und die Ausgabedaten des simulierten Modells werden als zu trainierende Daten des AI-Modells verwendet. Beispielsweise ist vorgesehen, dass im simulierten Modell die Geschwindigkeit des Fahrzeugs auf [-50, -40, -30, ..., 0, 10, 20, 30, 40, ..., 150] km/h, die Längsbeschleunigung auf [-12, -9, -8, ..., 0, 1, 2, 3, ..., 12] m/s², die Gierrate auf [-50, -40, -30, ..., 0, ..., 30, 40, 50] Grad/s, der Schiebewinkel auf [-50, -40, -30, ..., 0, ..., 30, 40, 50] Grad, die Gierrate-Beschleunigung auf [-100, -80, -60, ..., 0, ..., 60, 80, 100] Grad/s² und die Querbeschleunigung auf [-12, -9, - 8, ..., 0, 1, 2, 3, ..., 12] m/s² eingestellt werden kann. Solche eingestellte dynamische Information wird als Eingabe verwendet, während ein tatsächlicher Wert zur Einstellung des Lenkwinkels des Vorderrades als Ausgabe verwendet wird. Verschiedene Kombinationen von der Geschwindigkeit, der Längsbeschleunigung, der Gierrate, dem Schiebewinkel, der Gierrate-Beschleunigung und der Querbeschleunigung des Fahrzeugs können verschiedenen Lenkwinkeln des Vorderrades zugeordnet sein. Die Eingabe- und Ausgabewerte des simulierten Modells werden in das AI-Modell eingegeben.

Durch das AI-Modell können verschiedene Szenarien trainiert werden. Die wesentlichen Trainingsszenarien können sich auf Szenarien des Fahrzeugs mit hochfrequenter und großamplitudiger Gierrate sowie großen Schiebewinkel beziehen. Das heißt, es kann sich bei der eingestellten dynamischen Information um eine hochfrequente und großamplitudige Gierrate sowie einen großen Schiebewinkel handeln, so dass in solchen stark nichtstationären Szenarien das AI-Modell den Lenkwinkel des Vorderrades genau vorhersagen kann. Im vorliegenden Ausführungsbeispiel ist der Trainingsprozess des AI-Modells nicht konkret definiert. Durch AI-Training kann ein genauer Vorhersagewert des Lenkwinkels des Vorderrades erhalten werden, wenn das Fahrzeug in einen stark nichtstationären Zustand kommt. Nach dem Training des AI-Modells und während der Anwendung des AI-Modells kann die in das AI-Modell eingegebene dynamische Information die Geschwindigkeit, die Längsbeschleunigung, die Gierrate, den Schiebewinkel, die Gierrate-Beschleunigung und die Querbeschleunigung des Fahrzeugs umfassen.

In Verbindung mit der dynamischen Information und dem Vorhersagewert des Lenkwinkels kann mehr Bezug auf den Vorhersagewert des Lenkwinkels genommen werden, wenn sich das Fahrzeug aktuell in einem stark nichtstationären Zustand befindet. Es kann weniger Bezug auf den Vorhersagewert des Lenkwinkels genommen werden, wenn sich das Fahrzeug in einem stationären Zustand befindet.

Im vorliegenden Ausführungsbeispiel ist vorgesehen, dass die Bestimmung der ersten Lenkinformation des Fahrzeugs gemäß der dynamischen Information und dem Vorhersagewert des Lenkwinkels umfasst: Erfassung eines ersten vorgegebenen Lenkwinkelmodells und eines zweiten vorgegebenen Lenkwinkelmodells, wobei das erste vorgegebene Lenkwinkelmodell eine Funktionsbeziehung zwischen der dynamischen Information und dem Lenkwinkel des Vorderrades und das zweite vorgegebene Lenkwinkelmodell eine Funktionsbeziehung zwischen der dynamischen Information, dem Vorhersagewert des Lenkwinkels und dem Lenkwinkel des Vorderrades charakterisiert; und Bestimmung der ersten Lenkinformation des Fahrzeugs gemäß der dynamischen Information, dem Vorhersagewert des Lenkwinkels, dem ersten vorgegebenen Lenkwinkelmodell und dem zweiten vorgegebenen Lenkwinkelmodell mittels eines vorgegebenen Algorithmus eines erweiterten Kalman-Filters.

Insbesondere sind das erste Lenkwinkelmodell und das zweite Lenkwinkelmodell vorgegeben, wobei das erste Lenkwinkelmodell eine Funktionsbeziehung zwischen der dynamischen Information und dem Lenkwinkel des Vorderrades und das zweite Lenkwinkelmodell eine Funktionsbeziehung zwischen der dynamischen Information, dem Vorhersagewert des Lenkwinkels und dem Lenkwinkel des Vorderrades charakterisiert. Das heißt, es kann sich bei dem ersten Lenkwinkelmodell um eine Berechnungsformel in Bezug auf die dynamische Information und den Lenkwinkel des Vorderrades und bei dem zweiten Lenkwinkelmodell um eine Berechnungsformel in Bezug auf die dynamische Information, den Vorhersagewert des Lenkwinkels und den Lenkwinkel des Vorderrades handeln.

Die dynamische Information wird in das erste Lenkwinkelmodell eingesetzt, sowie die dynamische Information und der Vorhersagewert des Lenkwinkels werden in das zweite Lenkwinkelmodell eingesetzt. Anhand des vorgegebenen Algorithmus des erweiterten Kalman-Filters werden das eingesetzte erste und zweite Lenkwinkelmodell berechnet und die erste Lenkinformation ergibt sich als Berechnungsergebnis. Das erste Lenkwinkelmodell wird als Zustand-Gleichung verwendet, während das zweite Lenkwinkelmodell als Ausgabe-Gleichung verwendet wird. Im erweiterten Kalman-Filter kann ein Schätzwert des Lenkwinkels des Vorderrades, also die erste Lenkinformation, durch die Berechnung gemäß der Zustand-Gleichung und der Ausgabe-Gleichung ermittelt werden. Im vorliegenden Ausführungsbeispiel ist der Berechnungsvorgang des erweiterten Kalman-Filters nicht konkret definiert. Bei dem ersten Lenkwinkelmodell handelt es sich um eine fünfdimensionale Zustand-Gleichung.

Dadurch bestehen die vorteilhaften Auswirkungen darin, dass anhand des erweiterten Kalman-Filters und in Verbindung mit der Zustand-Gleichung und der Ausgabe-Gleichung die Präzision der Bestimmung der ersten Lenkinformation und somit die Präzision der Bestimmung der Information über den Lenkwinkel des Vorderrades erhöht wird.

Im vorliegenden Ausführungsbeispiel ist das erste vorgegebene Lenkwinkelmodell als Folgendes charakterisiert: $\left[\begin{matrix}{\dot{v}}_{y} \\ {\dot{w}}_{z} \\ {\dot{δ}}_{f} \\ {{δ}^{¨}}_{f} \\ {\dot{δ}}_{r}\end{matrix}\right] = \left[\begin{matrix}- \frac{{C}_{f} + {C}_{r}}{{mv}_{x}} - \frac{{C}_{f} {L}_{f} - {C}_{r} {L}_{r}}{{mv}_{x}} - {v}_{x} \frac{{C}_{f}}{m} 0 \frac{{C}_{r}}{m} \\ - \frac{{C}_{f} {L}_{f} - {C}_{r} {L}_{r}}{{J}_{z} {v}_{x}} - \frac{{C}_{f} {L}_{f}^{2} + {C}_{r} {L}_{r}^{2}}{{J}_{z} {v}_{x}} \frac{{C}_{r}}{{J}_{z}} \times {L}_{f} 0 \frac{{C}_{r}}{{J}_{z}} \times {L}_{r} \\ 0 0 0 1 0 \\ \frac{{C}_{f} {L}_{x}}{{J}_{s} {v}_{x}} \frac{{C}_{f} {L}_{f} {L}_{x}}{{J}_{s} {v}_{x}} - \frac{{C}_{f} {L}_{x}}{{J}_{s}} - \frac{{B}_{s}}{{J}_{s}} 0 \\ 0 0 0 0 0\end{matrix}\right] \left[\begin{matrix}{v}_{y} \\ {w}_{z} \\ {δ}_{f} \\ {\dot{δ}}_{f} \\ {δ}_{r}\end{matrix}\right] + \left[\begin{matrix}0 & 0 \\ \frac{{W}_{f}}{2 {J}_{z}} & \frac{{W}_{r}}{2 {J}_{z}} \\ 0 & 0 \\ \frac{{L}_{y}}{{J}_{s}} & 0 \\ 0 & 0\end{matrix}\right] \left[\begin{matrix}{ΔF}_{fxb} - {ΔF}_{fxd} \\ {ΔF}_{rxb} - {ΔF}_{rxd}\end{matrix}\right] ;$ wobei v_{y} die Quergeschwindigkeit des Fahrzeugs, v̇_{y} die zeitliche Ableitung der Quergeschwindigkeit, w_{z} die Gierrate, ẇ_{z} die Gierbeschleunigung, δ_{f} den Lenkwinkel des Vorderrades, δ̇_{f} die Winkelgeschwindigkeit des Vorderrades, *δ̈_{f}* die Winkelbeschleunigung des Vorderrades, δᵣ den Lenkwinkel eines Hinterrades, δ̇ᵣ die Winkelgeschwindigkeit des Hinterrades, m die Masse des Fahrzeugs, vₓ die Längsgeschwindigkeit des Fahrzeugs, C_{f} die Seitensteifigkeit einer Vorderachse, Cᵣ die Seitensteifigkeit einer Hinterachse, L_{f} den Abstand vom Schwerpunkt zur Vorderachse, Lᵣ den Abstand vom Schwerpunkt zur Hinterachse, J_{z} das Trägheitsmoment des Fahrzeugs um eine Z-Achse, Lₓ die Schleppweite, Bₛ die Dämpfung eines vorderen Lenksystems, Jₛ das Trägheitsmoment des vorderen Lenksystems, W_{f} die Spurweite der Vorderachse, Wᵣ die Spurweite der Hinterachse, L_{y} den Lenkrollradius, ΔF_{fxb} den Differenzwert der Bremskräfte auf der linken und rechten Seite der Vorderachse, ΔF_{fxd} den Differenzwert der Antriebskräfte auf der linken und rechten Seite der Vorderachse, ΔF_{rxb} den Differenzwert der Bremskräfte auf der linken und rechten Seite der Hinterachse und ΔF_{rxd} den Differenzwert der Antriebskräfte auf der linken und rechten Seite der Hinterachse charakterisiert.

Insbesondere wird eine Dynamik-Gleichung in Bezug auf fünf Arten von Zustandsdaten vorab erstellt. Die fünf Arten von Zustandsdaten umfassen die Quergeschwindigkeit v_{y}, die Gierrate bzw. die Gierwinkelgeschwindigkeit w_{z}, den Lenkwinkel δ_{f} des Vorderrades, die Lenkwinkelgeschwindigkeit δ̇_{f} des Vorderrades und den Lenkwinkel **δᵣ** des Hinterrades. Die Dynamik-Gleichungen in Bezug auf diese fünf Arten von Zustandsdaten sind jeweils: ${\dot{v}}_{y} = - \frac{{C}_{f}}{m} \left(\frac{{v}_{y} + {w}_{z} \times {L}_{f}}{{v}_{x}}-{δ}_{f}\right) - \frac{{C}_{r}}{m} \left(\frac{{v}_{y} - {w}_{z} \times {L}_{r}}{{v}_{x}}-{δ}_{r}\right) - {w}_{z} \times {v}_{x} ;$ ${\dot{w}}_{z} = - \frac{{C}_{f}}{{J}_{z}} \left(\frac{{v}_{y} + {w}_{z} \times {L}_{f}}{{v}_{x}}-{δ}_{f}\right) \times {L}_{f} + \frac{{C}_{r}}{{J}_{z}} \left(\frac{{v}_{y} - {w}_{z} \times {L}_{r}}{{v}_{x}}-{δ}_{r}\right) \times {L}_{r} + \frac{1}{{J}_{z}} \left(\begin{matrix}\frac{{W}_{f}}{2} \times \left(Δ{F}_{fxb}-Δ{F}_{fxd}\right) + \\ \frac{{W}_{r}}{2} \times \left({ΔF}_{rxb}-{ΔF}_{rxd}\right)\end{matrix}\right) ;$ ${\dot{δ}}_{f} = {\dot{δ}}_{f} ;$ ${\dot{δ}}_{f} = - \frac{1}{{J}_{s}} \left({B}_{s}\times {\dot{δ}}_{f}+{K}_{s}\times {δ}_{f}+{M}_{s}-{C}_{f}\left(\frac{{v}_{y} + {w}_{z} \times {L}_{f}}{{v}_{x}}-{δ}_{f}\right)\times {L}_{x}\right) + \frac{1}{{J}_{s}} \left(\begin{matrix}\left(Δ{F}_{fxb}-Δ{F}_{fxb}\right) \times \\ {L}_{y}\end{matrix}\right) ;$ ${\dot{δ}}_{r} = 0 ;$ wobei Kₛ für die Steifigkeit des vorderen Lenksystems und Mₛ für das gesamte Reibungsmoment des vorderen Lenksystems steht. Durch Umwandlungen dieser fünf Dynamik-Gleichungen ergibt sich die Formel des ersten Lenkwinkelmodells, also die Zustand-Gleichung. Zur dynamischen Information gehören: die Quergeschwindigkeit des Fahrzeugs, die Gierrate, die Masse des Fahrzeugs, die Längsgeschwindigkeit, die Seitensteifigkeit der Vorderachse, die Seitensteifigkeit der Hinterachse, der Abstand vom Schwerpunkt zur Vorderachse, der Abstand vom Schwerpunkt zur Hinterachse, das Trägheitsmoment des Fahrzeugs um die Z-Achse, die Schleppweite, die Dämpfung des vorderen Lenksystems, das Trägheitsmoment des vorderen Lenksystems, die Spurweite der Vorderachse, die Spurweite der Hinterachse, der Lenkrollradius, der Differenzwert der Bremskräfte auf der linken und rechten Seite der Vorderachse, der Differenzwert der Antriebskräfte auf der linken und rechten Seite der Vorderachse, der Differenzwert der Bremskräfte auf der linken und rechten Seite der Hinterachse, der Differenzwert der Antriebskräfte auf der linken und rechten Seite der Hinterachse, die Steifigkeit des vorderen Lenksystems, das gesamte Reibungsmoment des vorderen Lenksystems und dergleichen.

Dadurch bestehen die vorteilhaften Auswirkungen darin, dass durch die Erstellung einer fünfdimensionalen Zustandsraum-Gleichung Faktoren, wie der Lenkwinkel des Hinterrades und eine unausgeglichene Längsantriebskraft eines radseitig angetriebenen Fahrzeugs usw., weiter berücksichtigt werden und somit die Präzision der Schätzung des Lenkwinkels des Vorderrades erhöht wird.

Im vorliegenden Ausführungsbeispiel ist das zweite vorgegebene Lenkwinkelmodell als Folgendes charakterisiert: $\left[\begin{matrix}{a}_{y} \\ {w}_{z} \\ {δ}_{f}^{*} \\ {δ}_{r}\end{matrix}\right] = \left[\begin{matrix}- \frac{{C}_{f} + {C}_{r}}{{mv}_{x}} - \frac{{C}_{f} {L}_{f} - {C}_{r} {L}_{r}}{{mv}_{x}} \frac{{C}_{f}}{m} 0 \frac{{C}_{r}}{m} \\ 0 1 0 0 0 \\ 0 0 1 0 0 \\ 0 0 0 0 1\end{matrix}\right] \left[\begin{matrix}{v}_{y} \\ {w}_{z} \\ {δ}_{f} \\ {\dot{δ}}_{f} \\ {δ}_{r}\end{matrix}\right] ;$ wobei v_{y} die Quergeschwindigkeit des Fahrzeugs, w_{z} die Gierrate, δ_{f} den Lenkwinkel des Vorderrades, δ̇_{f} die Winkelgeschwindigkeit des Vorderrades, δᵣ den Lenkwinkel des Hinterrades, ${δ}_{f}^{*}$ den Vorhersagewert des Lenkwinkels, m die Masse des Fahrzeugs, vₓ die Längsgeschwindigkeit des Fahrzeugs, C_{f} die Seitensteifigkeit der Vorderachse, Cᵣ die Seitensteifigkeit der Hinterachse, L_{f} den Abstand vom Schwerpunkt zur Vorderachse, Lᵣ den Abstand vom Schwerpunkt zur Hinterachse und a_{y} die Querbeschleunigung charakterisiert.

Insbesondere wird die Ausgabe-Gleichung der fünf Arten von Zustandsdaten als das zweite Lenkwinkelmodell erstellt. Bei ${δ}_{f}^{*}$ im zweiten Lenkwinkelmodell handelt es sich um ein vorhergesagtes Ergebnis des Lenkwinkels des Vorderrades anhand des AI-Modells und es kann die Bestimmung der ersten Lenkinformation unterstützen. Im ersten Lenkwinkelmodell und zweiten Lenkwinkelmodell handelt es sich bei den erfassbaren Daten um die dynamische Information. Beispielsweise kann die dynamische Information umfassen: die Quergeschwindigkeit, die Gierrate, die Masse des Fahrzeugs, die Längsgeschwindigkeit, die Seitensteifigkeit, die Seitensteifigkeit, den Abstand vom Schwerpunkt zur Vorderachse, den Abstand vom Schwerpunkt zur Hinterachse, die Querbeschleunigung und dergleichen. Der Lenkwinkel des Vorderrades gehört zu den fünf Arten von Zustandsdaten. Anhand der Zustand-Gleichung und der Ausgabe-Gleichung können die fünf Arten von Zustandsdaten ermittelt werden, so dass ein geschätzter Lenkwinkel des Vorderrades, also die erste Lenkinformation, erhalten wird.

Dadurch bestehen die vorteilhaften Auswirkungen darin, dass die Genauigkeit der Schätzung durch die Verbindung der Zustand-Gleichung mit der Ausgabe-Gleichung und durch die Verbindung der Ausgabe-Gleichung mit dem AI-Modell effektiv erhöht wird, weil in einigen Szenarien das Schätzergebnis des erweiterten Kalman-Filters nicht genau ist.

Im vorliegenden Ausführungsbeispiel ist vorgesehen, dass die dynamische Information den Schiebewinkel und die Gierrate umfasst; und dass die Bestimmung der ersten Lenkinformation des Fahrzeugs gemäß der dynamischen Information, dem Vorhersagewert des Lenkwinkels, dem ersten vorgegebenen Lenkwinkelmodell und dem zweiten vorgegebenen Lenkwinkelmodell mittels eines Algorithmus eines erweiterten Kalman-Filters umfasst: Bestimmung des Messrauschens des Fahrzeugs gemäß dem Schiebewinkel und der Gierrate, wobei das Messrauschen die Zuverlässigkeit des Vorhersagewerts des Lenkwinkels charakterisiert; und Bestimmung der ersten Lenkinformation des Fahrzeugs gemäß dem Messrauschen, der dynamischen Information, dem Vorhersagewert des Lenkwinkels, dem ersten vorgegebenen Lenkwinkelmodell und dem zweiten vorgegebenen Lenkwinkelmodell mittels des Algorithmus des erweiterten Kalman-Filters.

Insbesondere wird das Berechnungsergebnis des erweiterten Kalman-Filters durch das Messrauschen beeinflusst, wenn der Vorhersagewert des Lenkwinkels, der durch das AI-Modell vorhergesagt ist, in den erweiterten Kalman-Filter eingesetzt wird. Das Messrauschen bezieht sich auf einen Parameterwert, der sich mit der Dynamik des Fahrzeugs ändert. Das Prinzip liegt darin, dass das Messrauschen umso geringer ist, je größer die Gierrate und der Schiebewinkel sind. Das heißt, je höher der Grad der Stationarität ist, desto höher ist das Messrauschen. Der erweiterte Kalman-Filter ist in einem stark dynamischen Zustand bzw. einem nichtstationären Zustand stärker von dem AI-Modell zur Vorhersage des Lenkwinkels des Vorderrades des Fahrzeugs abhängig und somit wird die Abhängigkeit von einem Kalman-Filter reduziert. Das heißt, je geringer das Messrauschen ist, desto höher ist die Zuverlässigkeit des Vorhersagewerts des Lenkwinkels anhand des AI-Modells. Je höher das Messrauschen ist, desto geringer ist die Zuverlässigkeit des Vorhersagewerts des Lenkwinkels anhand des AI-Modells.

Die Assoziationsbeziehung zwischen der Gierrate, dem Schiebewinkel und dem Messrauschen kann vorgegeben sein. Nach der Bestimmung der aktuellen Gierrate und des aktuellen Schiebewinkels des Fahrzeugs kann das entsprechende Messrauschen gemäß der Assoziationsbeziehung gesucht werden. Das Messrauschen wird in den erweiterten Kalman-Filter eingeführt und der erweiterte Kalman-Filter führt eine Berechnung gemäß dem Messrauschen durch, um die erste Lenkinformation zu erhalten. Tabelle 1 ist eine Tabelle für die Assoziationsbeziehung zwischen der Gierrate, dem Schiebewinkel und dem Messrauschen.

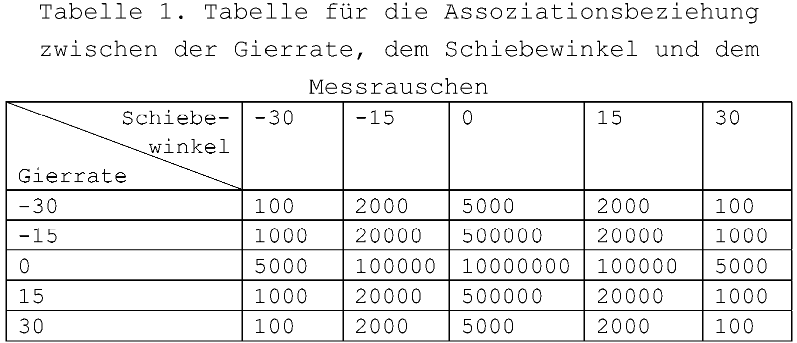

Am Beispiel der Tabelle 1 ist das Messrauschen maximal, also 10000000, wenn der Schiebewinkel und die Gierrate 0 sind.

Dadurch bestehen die vorteilhaften Auswirkungen darin, dass das AI-Modell dazu verwendet wird, den Lenkwinkel des Vorderrades des Fahrzeugs in stark dynamischen und hochfrequenten Szenarien vorherzusagen. Durch die Einführung des Messrauschens kann die Zuverlässigkeit des Vorhersagewerts des Lenkwinkels anhand des AI-Modells bestimmt werden, so dass die Präzision der Berechnung des erweiterten Kalman-Filters erhöht wird.

S203, Erfassung eines dritten vorgegebenen Lenkwinkelmodells, wobei das dritte vorgegebene Lenkwinkelmodell eine Funktionsbeziehung zwischen der stationären Information und dem Lenkwinkel des Vorderrades charakterisiert, und wobei die stationäre Information mindestens eine von der Gierrate, der Längsgeschwindigkeit des Fahrzeugs und der charakteristischen Fahrzeuggeschwindigkeit umfasst; und Bestimmung der zweiten Lenkinformation des Fahrzeugs gemäß der stationären Information und dem dritten vorgegebenen Lenkwinkelmodell mittels einer vorgegebenen rekursiven Kleinste-Quadrate-Methode.

Beispielhaft ist das dritte Lenkwinkelmodell vorgegeben, wobei das dritte vorgegebene Lenkwinkelmodell eine Funktionsbeziehung zwischen der stationären Information und dem Lenkwinkel des Vorderrades charakterisiert, und wobei die stationäre Information die Gierrate, die Längsgeschwindigkeit des Fahrzeugs und die charakteristische Fahrzeuggeschwindigkeit umfassen kann. Das heißt, bei dem dritten Lenkwinkelmodell kann es sich um eine Berechnungsformel in Bezug auf die Gierrate, die Längsgeschwindigkeit des Fahrzeugs, die charakteristische Fahrzeuggeschwindigkeit und den Lenkwinkel des Vorderrades handeln.

Das dritte Lenkwinkelmodell ist eine eindimensionale Zustand-Gleichung. Die stationäre Information wird in das dritte Lenkwinkelmodell eingesetzt. Anhand einer vorgegebenen rekursiven Kleinste-Quadrate-Methode wird das eingesetzte dritte Lenkwinkelmodell berechnet und die zweite Lenkinformation ergibt sich als Berechnungsergebnis. Im vorliegenden Ausführungsbeispiel ist der Berechnungsvorgang der rekursiven Kleinste-Quadrate-Methode nicht konkret definiert.

Dadurch bestehen die vorteilhaften Auswirkungen darin, dass auf der Grundlage der stationären Eigenschaft des Fahrzeugs eine eindimensionale Zustand-Gleichung erstellt und der Lenkwinkel des Vorderrades anhand der rekursiven Kleinste-Quadrate-Methode geschätzt wird, so dass der Lenkwinkel des Vorderrades aus verschiedenen Perspektiven geschätzt und die Präzision der Bestimmung des Lenkwinkels des Vorderrades erhöht wird.

Im vorliegenden Ausführungsbeispiel ist die Reihenfolge für die Durchführung von S202 und S203 nicht konkret definiert.

Im vorliegenden Ausführungsbeispiel ist das dritte vorgegebene Lenkwinkelmodell als Folgendes charakterisiert: ${w}_{z} = \frac{{v}_{x}}{L \times \left(1+{\left(\frac{{v}_{x}}{{v}_{cx}}\right)}^{2}\right)} {δ}_{f} ;$ wobei w_{z} die Gierrate, L den Radstand des Fahrzeugs, vₓ die Längsgeschwindigkeit, v_{cx} die charakteristische Fahrzeuggeschwindigkeit und δ_{f} den Lenkwinkel des Vorderrades charakterisiert.

Insbesondere kann für die Gleichung der rekursiven Kleinste-Quadrate-Methode die Formel Y = Ax gelten. Im vorliegenden Ausführungsbeispiel ist vorgesehen, dass Y w_{z}, $A \frac{{v}_{x}}{L \times \left(1+{\left(\frac{{v}_{x}}{{v}_{cx}}\right)}^{2}\right)}$ und x δ_{f} entspricht.

Anhand der obigen eindimensionalen Zustand-Gleichung und durch die rekursive Kleinste-Quadrate-Methode wird der Schätzwert des Lenkwinkels des Vorderrades als die zweite Lenkinformation ermittelt.

Dadurch bestehen die vorteilhaften Auswirkungen darin, dass die Erstellung der Bewegungsbeziehung zwischen der stationären Gierrate und dem Lenkwinkel des Vorderrades die Schätzung des Lenkwinkels des Vorderrades mittels des Kinematikmodells des Fahrzeugs realisiert und somit die Präzision der Bestimmung des Lenkwinkel des Vorderrades erhöht wird.

S204, Bestimmung von Information über einen Lenkwinkel des Vorderrades des Fahrzeugs zum aktuellen Zeitpunkt gemäß der ersten Lenkinformation und der zweiten Lenkinformation.

Beispielhaft kann dieser Schritt auf den obigen Schritt S103 verwiesen werden und wird hier nicht mehr wiederholt.

Ein Ausführungsbeispiel der vorliegenden Anmeldung stellt ein Verfahren zur Bestimmung eines Lenkwinkels eines Vorderrades eines Fahrzeugs bereit. Durch die Erfassung der dynamischen Information und der stationären Information des Fahrzeugs können eine dynamische Eigenschaft und ein stationäres Merkmal des Fahrzeugs erhalten werden. Auf der Grundlage der dynamischen Eigenschaft des Fahrzeugs kann ein Lenkwinkel des Vorderrades geschätzt werden. Auf der Grundlage der stationären Eigenschaft des Fahrzeugs kann auch ein Lenkwinkel des Vorderrades geschätzt werden. In Verbindung mit den zwei Schätzergebnissen wird ein endgültiger Lenkwinkel des Vorderrades bestimmt, wodurch die Präzision der Bestimmung des Lenkwinkels des Vorderrades des Fahrzeugs effektiv erhöht und somit eine präzise Steuerung des Fahrzeugs erleichtert wird.

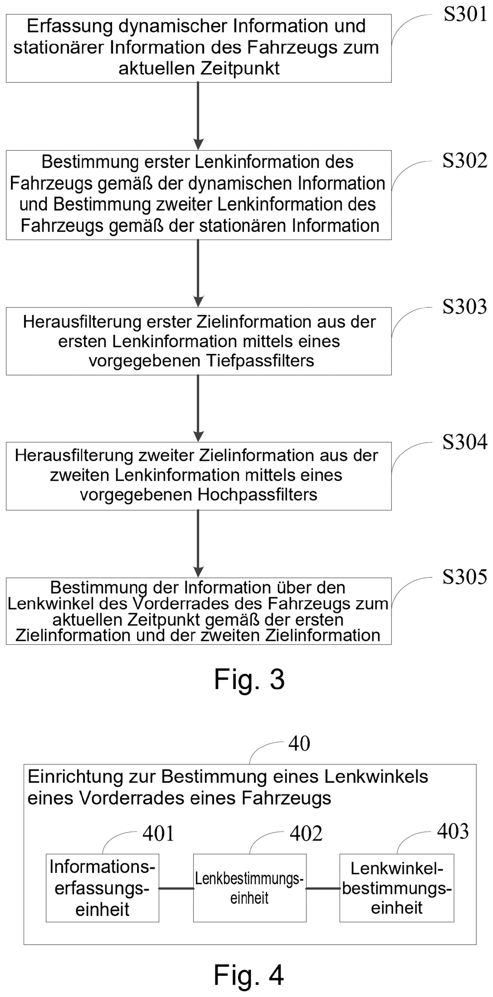

Fig. 3 zeigt ein schematisches Flussdiagramm des Verfahrens zur Bestimmung eines Lenkwinkels eines Vorderrades eines Fahrzeugs nach einem Ausführungsbeispiel der vorliegenden Anmeldung. Wie in Fig. 3 gezeigt, wird auf der Grundlage des Ausführungsbeispiels in Fig. 1 im vorliegenden Ausführungsbeispiel das Verfahren zur Bestimmung eines Lenkwinkels eines Vorderrades eines Fahrzeugs näher erläutert. Das Verfahren umfasst:
S301, Erfassung dynamischer Information und stationärer Information des Fahrzeugs zum aktuellen Zeitpunkt, wobei die dynamische Information ein Fahr- und Lenkverhalten des Fahrzeugs und die stationäre Information ein stationäres Gierverhalten des Fahrzeugs charakterisiert.

Beispielhaft kann dieser Schritt auf den obigen Schritt S101 verweisen und wird hier nicht mehr wiederholt.

S302, Bestimmung erster Lenkinformation des Fahrzeugs gemäß der dynamischen Information und Bestimmung zweiter Lenkinformation des Fahrzeugs gemäß der stationären Information, wobei die erste Lenkinformation und die zweite Lenkinformation jeweils einen geschätzten Lenkwinkel des Vorderrades des Fahrzeugs charakterisieren.

Beispielhaft kann dieser Schritt auf den obigen Schritt S102 verwiesen werden und wird hier nicht mehr wiederholt.

S303, Herausfilterung erster Zielinformation aus der ersten Lenkinformation mittels eines vorgegebenen Tiefpassfilters, wobei die erste Zielinformation ein Signal in der ersten Lenkinformation, dessen Frequenzwert kleiner als ein erster vorgegebener Frequenzschwellenwert ist, charakterisiert.

Für die Dynamik-Gleichung des Fahrzeugs besteht beispielhaft eine erhebliche Verzögerung und Rausch in hochfrequenter Reaktion. Für eine Kinematik-Gleichung des Fahrzeugs hat der Messfehler des Sensors in Niederfrequenz einen erheblichen Einfluss auf das Schätzergebnis. Es handelt sich bei der Dynamik-Gleichung des Fahrzeugs um eine Berechnungsgleichung des Kalman-Filters und bei der Kinematik-Gleichung um eine Berechnungsgleichung der rekursiven Kleinste-Quadrate-Methode. Das heißt, der Kalman-Filter selbst in der ersten Lenkinformation ist komplex und die Verarbeitungsgeschwindigkeit des Signals ist gering. Die Verarbeitung des hochfrequenten Signals ist verzögert, also sie hat Verzögerung, aber die Präzision ist hoch. In der zweiten Lenkinformation ist die Verarbeitungsgeschwindigkeit des Signals hoch, aber nicht präzis. Insbesondere in Bezug auf das niederfrequente Signal führt der Fehler des Sensors selbst zu geringerer Präzision in der Niederfrequenz. Deshalb muss ein hochfrequenter Teil in der ersten Lenkinformation und ein niederfrequenter Teil in der zweiten Lenkinformation gefiltert werden.

Ein Tiefpassfilter ist vorab vorgesehen. Durch den Tiefpassfilter wird ein Teil in der ersten Lenkinformation, der in Hochfrequenz schlecht reagiert, gefiltert und ein genaueres und niederfrequentes Schätzergebnis verbleibt. Beispielsweise kann ein erster Frequenzschwellenwert vorgegeben sein. In der ersten Lenkinformation verbleiben Signale, deren Frequenzwerte kleiner als oder gleich dem ersten Frequenzschwellenwert sind, während Signale, deren Frequenzwerte größer als der erste Frequenzschwellenwert, gefiltert werden. Die verbleibende Information ist die erste Zielinformation.

S304, Herausfilterung zweiter Zielinformation aus der zweiten Lenkinformation mittels eines vorgegebenen Hochpassfilters, wobei die zweite Zielinformation ein Signal in der zweiten Lenkinformation, dessen Frequenzwert größer als ein zweiter vorgegebener Frequenzschwellenwert ist, charakterisiert.

Beispielhaft ist ein Hochpassfilter vorab vorgesehen. Durch den Hochpassfilter wird ein Teil in der zweiten Lenkinformation, der große Fehler in Niederfrequenz aufweist, gefiltert und ein Teil, der in Hochfrequenz gut reagiert, verbleibt. Beispielsweise kann ein zweiter Frequenzschwellenwert vorgegeben sein. In der zweiten Lenkinformation verbleiben Signale, deren Frequenzwerte größer als oder gleich dem zweiten Frequenzschwellenwert sind, während Signale, deren Frequenzwerte kleiner sind als der zweite Frequenzschwellenwert, gefiltert werden. Die verbleibende Information ist die zweite Zielinformation.

Der erste Frequenzschwellenwert und der zweite Frequenzschwellenwert können entweder gleich oder unterschiedlich sein. Beispielsweise können der erste Frequenzschwellenwert und der zweite Frequenzschwellenwert als 100 Hz eingestellt sein. Im vorliegenden Ausführungsbeispiel kann es dazu neigen, dass die Daten in der ersten Lenkinformation verbleiben. Dadurch kann der erste Frequenzschwellenwert relativ groß eingestellt werden, so dass mehr niederfrequente Teile verbleiben.

Im vorliegenden Ausführungsbeispiel ist die Reihenfolge für die Durchführung von S303 und S304 nicht konkret definiert.

S305, Bestimmung der Information über den Lenkwinkel des Vorderrades des Fahrzeugs zum aktuellen Zeitpunkt gemäß der ersten Zielinformation und der zweiten Zielinformation.

Nach dem Erhalten der ersten Zielinformation und der zweiten Zielinformation kann beispielhaft die erste Zielinformation mit der zweiten Zielinformation miteinander verbunden werden und nach der Verbindung wird die Information über den Lenkwinkel des Vorderrades des Fahrzeugs zum aktuellen Zeitpunkt erhalten. Beispielsweise können gemäß vorgegebener Gewichtung die erste Zielinformation und die zweite Zielinformation gewichtet aufsummiert werden, um die Information über den Lenkwinkel des Vorderrades zu erhalten.

Im vorliegenden Ausführungsbeispiel kann die Information über den Lenkwinkel des Vorderrades anhand der folgenden Formel berechnet werden: ${δ}_{fc} = \frac{1}{τs + 1} {δ}_{fK} + \frac{τs}{τs + 1} {δ}_{fR} ;$ wobei δ_{fc} für die Information über den Lenkwinkel des Vorderrades, τ für die vorgegebene Zeitkonstante, s für die komplexe Frequenzvariable, δ_{fK} für die erste Zielinformation und δ_{fR} für die zweite Zielinformation steht.

Im vorliegenden Ausführungsbeispiel ist vorgesehen, dass bei der Erstellung der fünfdimensionalen Zustandsraum-Gleichung der Einfluss von Faktoren, wie dem Lenkwinkel des Hinterrades und einer unausgeglichenen Längsantriebskraft eines radseitig angetriebenen Fahrzeugs usw., auf das vorhandene Schätzmodell berücksichtigt und somit die Anpassungsfähigkeit der Schätzung des Lenkwinkels des Vorderrades erhöht wird. Dadurch, dass das AI-Modell eingeführt wird, um den Lenkwinkel des Vorderrades des Fahrzeugs in stark dynamischen und hochfrequenten Szenarien vorherzusagen, wird das Problem schlechter Präzision der Schätzung des Lenkwinkels des Vorderrades in stark dynamischen Szenarien gelöst und somit wird der Abdeckungsumfang des AI-Modells in allen Szenarien erhöht. Dadurch wird ein anhand des Dynamikmodells des Fahrzeugs geschätzter Lenkwinkel des Vorderrades mit einem anhand des Kinematikmodells des Fahrzeugs geschätzten Lenkwinkel des Vorderrades verbunden, wobei die Präzision der Schätzung des Lenkwinkels des Vorderrades in ordnungsgemäßen Betriebsszenarien des Fahrzeugs erhöht und die Echtzeitleistung der Schätzung verstärkt wird.

Ein Ausführungsbeispiel der vorliegenden Anmeldung stellt ein Verfahren zur Bestimmung eines Lenkwinkels eines Vorderrades eines Fahrzeugs bereit. Durch die Erfassung der dynamischen Information und der stationären Information des Fahrzeugs können eine dynamische Eigenschaft und ein stationäres Merkmal des Fahrzeugs erhalten werden. Auf der Grundlage der dynamischen Eigenschaft des Fahrzeugs kann ein Lenkwinkel des Vorderrades geschätzt werden. Auf der Grundlage der stationären Eigenschaft des Fahrzeugs kann auch ein Lenkwinkel des Vorderrades geschätzt werden. In Verbindung mit den zwei Schätzergebnissen wird ein endgültiger Lenkwinkel des Vorderrades bestimmt, wodurch die Präzision der Bestimmung des Lenkwinkels des Vorderrades des Fahrzeugs effektiv erhöht und somit eine präzise Steuerung des Fahrzeugs erleichtert wird.

Fig. 4 zeigt eine schematische Strukturdarstellung einer Einrichtung zur Bestimmung eines Lenkwinkels eines Vorderrades eines Fahrzeugs nach einem Ausführungsbeispiel der vorliegenden Anmeldung. Wie in Fig. 4 gezeigt, umfasst eine Einrichtung 40 zur Bestimmung eines Lenkwinkels eines Vorderrades eines Fahrzeugs nach dem vorliegenden Ausführungsbeispiel: eine Informationserfassungseinheit 401, eine Lenkbestimmungseinheit 402 und eine Lenkwinkelbestimmungseinheit 403.

Die Informationserfassungseinheit 401 dient zur Erfassung dynamischer Information und stationärer Information des Fahrzeugs zum aktuellen Zeitpunkt, wobei die dynamische Information ein Fahr- und Lenkverhalten des Fahrzeugs und die stationäre Information ein stationäres Gierverhalten des Fahrzeugs charakterisiert;

Die Lenkbestimmungseinheit 402 dient zur Bestimmung erster Lenkinformation des Fahrzeugs gemäß der dynamischen Information und Bestimmung zweiter Lenkinformation des Fahrzeugs gemäß der stationären Information, wobei die erste Lenkinformation und die zweite Lenkinformation jeweils einen geschätzten Lenkwinkel des Vorderrades des Fahrzeugs charakterisieren.

Die Lenkwinkelbestimmungseinheit 403 dient zur Bestimmung von Information über einen Lenkwinkel des Vorderrades des Fahrzeugs zum aktuellen Zeitpunkt gemäß der ersten Lenkinformation und der zweiten Lenkinformation.

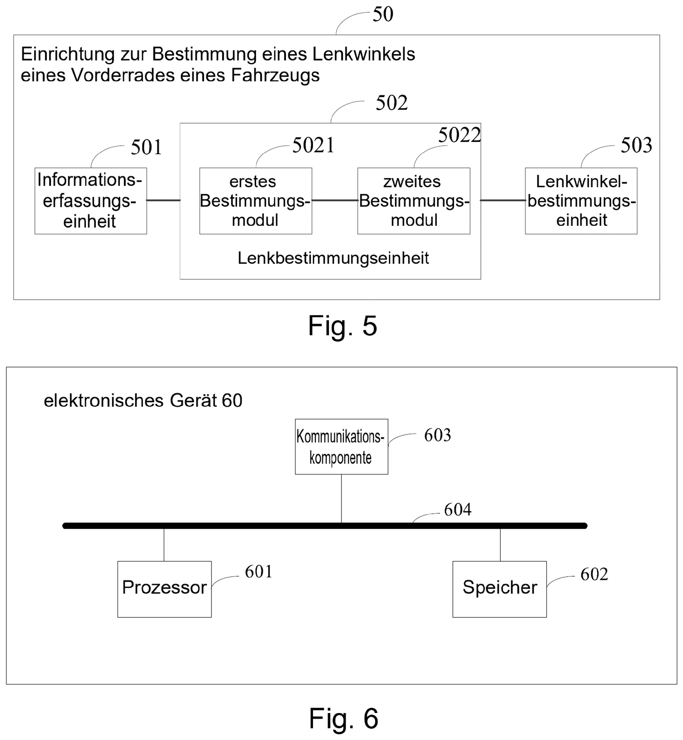

Fig. 5 zeigt eine strukturelle Blockdarstellung der Einrichtung zur Bestimmung eines Lenkwinkels eines Vorderrades eines Fahrzeugs nach einem Ausführungsbeispiel der vorliegenden Anmeldung. Wie in Fig. 5 gezeigt, umfasst eine Einrichtung 50 zur Bestimmung eines Lenkwinkels eines Vorderrades eines Fahrzeugs eine Informationserfassungseinheit 501, eine Lenkbestimmungseinheit 502 und eine Lenkwinkelbestimmungseinheit 503, wobei die Lenkbestimmungseinheit 502 ein erstes Bestimmungsmodul 5021 und ein zweites Bestimmungsmodul 5022 umfasst.

Das erste Bestimmungsmodul 5021 dient Folgendem: Bestimmung eines Vorhersagewerts des Lenkwinkels des Fahrzeugs gemäß der dynamischen Information mittels eines vorgegebenen künstlichen Intelligenzmodells, wobei es sich bei dem vorgegebenen künstlichen Intelligenzmodell um ein vorab erstelltes neuronales Netzwerkmodell handelt und zur Vorhersage des Lenkwinkels des Vorderrades des Fahrzeugs gemäß der dynamischen Information dient; und Bestimmung der ersten Lenkinformation des Fahrzeugs gemäß der dynamischen Information und dem Vorhersagewert des Lenkwinkels.

Das zweite Bestimmungsmodul 5022 dient Folgendem: Erfassung eines dritten vorgegebenen Lenkwinkelmodells, wobei das dritte vorgegebene Lenkwinkelmodell eine Funktionsbeziehung zwischen der stationären Information und dem Lenkwinkel des Vorderrades charakterisiert, und wobei die stationäre Information mindestens eine von der Gierrate, der Längsgeschwindigkeit des Fahrzeugs und der charakteristischen Fahrzeuggeschwindigkeit umfasst; und Bestimmung der zweiten Lenkinformation des Fahrzeugs gemäß der stationären Information und dem dritten vorgegebenen Lenkwinkelmodell mittels einer vorgegebenen rekursiven Kleinste-Quadrate-Methode.

In einem Beispiel dient das erste Bestimmungsmodul 5021 insbesondere Folgendem:
Erfassung eines ersten vorgegebenen Lenkwinkelmodells und eines zweiten vorgegebenen Lenkwinkelmodells, wobei das erste vorgegebene Lenkwinkelmodell eine Funktionsbeziehung zwischen der dynamischen Information und dem Lenkwinkel des Vorderrades und das zweite vorgegebene Lenkwinkelmodell eine Funktionsbeziehung zwischen der dynamischen Information, dem Vorhersagewert des Lenkwinkels und dem Lenkwinkel des Vorderrades charakterisiert; und
Bestimmung der ersten Lenkinformation des Fahrzeugs gemäß der dynamischen Information, dem Vorhersagewert des Lenkwinkels, dem ersten vorgegebenen Lenkwinkelmodell und dem zweiten vorgegebenen Lenkwinkelmodell mittels eines vorgegebenen Algorithmus eines erweiterten Kalman-Filters.

In einem Beispiel ist das erste vorgegebene Lenkwinkelmodell als Folgendes charakterisiert: $\left[\begin{matrix}{\dot{v}}_{y} \\ {\dot{w}}_{z} \\ {\dot{δ}}_{f} \\ {{δ}^{¨}}_{f} \\ {\dot{δ}}_{r}\end{matrix}\right] = \left[\begin{matrix}- \frac{{C}_{f} + {C}_{r}}{{mv}_{x}} - \frac{{C}_{f} {L}_{f} - {C}_{r} {L}_{r}}{{mv}_{x}} - {v}_{x} \frac{{C}_{f}}{m} 0 \frac{{C}_{r}}{m} \\ - \frac{{C}_{f} {L}_{f} - {C}_{r} {L}_{r}}{{J}_{z} {v}_{x}} - \frac{{C}_{f} {L}_{f}^{2} + {C}_{r} {L}_{r}^{2}}{{J}_{z} {v}_{x}} \frac{{C}_{r}}{{J}_{z}} \times {L}_{f} 0 \frac{{C}_{r}}{{J}_{z}} \times {L}_{r} \\ 0 0 0 1 0 \\ \frac{{C}_{f} {L}_{x}}{{J}_{s} {v}_{x}} \frac{{C}_{f} {L}_{f} {L}_{x}}{{J}_{s} {v}_{x}} - \frac{{C}_{f} {L}_{x}}{{J}_{s}} - \frac{{B}_{s}}{{J}_{s}} 0 \\ 0 0 0 0 0\end{matrix}\right] \left[\begin{matrix}{v}_{y} \\ {w}_{z} \\ {δ}_{f} \\ {\dot{δ}}_{f} \\ {δ}_{r}\end{matrix}\right] + \left[\begin{matrix}0 & 0 \\ \frac{{W}_{f}}{2 {J}_{z}} & \frac{{W}_{r}}{2 {J}_{z}} \\ 0 & 0 \\ \frac{{L}_{y}}{{J}_{s}} & 0 \\ 0 & 0\end{matrix}\right] \left[\begin{matrix}{ΔF}_{f \times b} - {ΔF}_{f \times d} \\ {ΔF}_{r \times b} - {ΔF}_{r \times d}\end{matrix}\right] ;$ wobei v_{y} die Quergeschwindigkeit des Fahrzeugs, v̇_{y} die zeitliche Ableitung der Quergeschwindigkeit, w_{z} die Gierrate, ẇ_{z} die Gierbeschleunigung, δ_{f} den Lenkwinkel des Vorderrades, δ̇_{f} die Winkelgeschwindigkeit des Vorderrades, *δ̈_{f}* die Winkelbeschleunigung des Vorderrades, den Lenkwinkel eines Hinterrades, δ̇ᵣ die Winkelgeschwindigkeit des Hinterrades, m die Masse des Fahrzeugs, vₓ die Längsgeschwindigkeit des Fahrzeugs, C_{f} die Seitensteifigkeit einer Vorderachse, Cᵣ die Seitensteifigkeit einer Hinterachse, L_{f} den Abstand vom Schwerpunkt zur Vorderachse, Lᵣ den Abstand vom Schwerpunkt zur Hinterachse, J_{z} das Trägheitsmoment des Fahrzeugs um eine Z-Achse, Lₓ die Schleppweite, Bₛ die Dämpfung eines vorderen Lenksystems, Jₛ das Trägheitsmoment des vorderen Lenksystems, W_{f} die Spurweite der Vorderachse, Wᵣ die Spurweite der Hinterachse, L_{y} den Lenkrollradius, ΔF_{fxb} den Differenzwert der Bremskräfte auf der linken und rechten Seite der Vorderachse, ΔF_{fxd} den Differenzwert der Antriebskräfte auf der linken und rechten Seite der Vorderachse, ΔF_{rxb} den Differenzwert der Bremskräfte auf der linken und rechten Seite der Hinterachse und ΔF_{rxd} den Differenzwert der Antriebskräfte auf der linken und rechten Seite der Hinterachse charakterisiert.

In einem Beispiel ist das zweite vorgegebene Lenkwinkelmodell als Folgendes charakterisiert: $\left[\begin{matrix}{a}_{y} \\ {w}_{z} \\ {δ}_{f}^{∗} \\ {δ}_{r}\end{matrix}\right] = \left[\begin{matrix}- \frac{{C}_{f} + {C}_{r}}{{mv}_{x}} - \frac{{C}_{f} {L}_{f} - {C}_{r} {L}_{r}}{{mv}_{x}} \frac{{C}_{f}}{m} 0 \frac{{C}_{r}}{m} \\ 0 1 0 0 0 \\ 0 0 1 0 0 \\ 0 0 0 0 1\end{matrix}\right] \left[\begin{matrix}{v}_{y} \\ {w}_{z} \\ {δ}_{f} \\ {\dot{δ}}_{f} \\ {δ}_{r}\end{matrix}\right] ;$ wobei v_{y} die Quergeschwindigkeit des Fahrzeugs, w_{z} die Gierrate, δ_{f} den Lenkwinkel des Vorderrades, δ̇_{f} die Winkelgeschwindigkeit des Vorderrades, den Lenkwinkel des Hinterrades, ${δ}_{f}^{∗}$ den Vorhersagewert des Lenkwinkels, m die Masse des Fahrzeugs, vₓ die Längsgeschwindigkeit des Fahrzeugs, C_{f} die Seitensteifigkeit der Vorderachse, Cᵣ die Seitensteifigkeit der Hinterachse, L_{f} den Abstand vom Schwerpunkt zur Vorderachse, Lᵣ den Abstand vom Schwerpunkt zur Hinterachse und a_{y} die Querbeschleunigung charakterisiert.

In einem Beispiel ist vorgesehen, dass die dynamische Information den Schiebewinkel und die Gierrate umfasst. Das erste Bestimmungsmodul 5021 dient insbesondere Folgendem:
Bestimmung des Messrauschens des Fahrzeugs gemäß dem Schiebewinkel und der Gierrate, wobei das Messrauschen die Zuverlässigkeit des Vorhersagewerts des Lenkwinkels charakterisiert; und
Bestimmung der ersten Lenkinformation des Fahrzeugs gemäß dem Messrauschen, der dynamischen Information, dem Vorhersagewert des Lenkwinkels, dem ersten vorgegebenen Lenkwinkelmodell und dem zweiten vorgegebenen Lenkwinkelmodell mittels des Algorithmus des erweiterten Kalman-Filters.

In einem Beispiel ist das dritte vorgegebene Lenkwinkelmodell als Folgendes charakterisiert: ${w}_{z} = \frac{{v}_{x}}{L \times \left(1+{\left(\frac{{v}_{x}}{{v}_{cx}}\right)}^{2}\right)} {δ}_{f} ;$ wobei w_{z} die Gierrate, L den Radstand des Fahrzeugs, vₓ die Längsgeschwindigkeit, v_{cx} die charakteristische Fahrzeuggeschwindigkeit und δ_{f} den Lenkwinkel des Vorderrades charakterisiert.

In einem Beispiel dient die Lenkwinkelbestimmungseinheit 503 insbesondere Folgendem:
Herausfilterung erster Zielinformation aus der ersten Lenkinformation mittels eines vorgegebenen Tiefpassfilters, wobei die erste Zielinformation ein Signal in der ersten Lenkinformation, dessen Frequenzwert kleiner als ein erster vorgegebener Frequenzschwellenwert ist, charakterisiert;
Herausfilterung zweiter Zielinformation aus der zweiten Lenkinformation mittels eines vorgegebenen Hochpassfilters, wobei die zweite Zielinformation ein Signal in der zweiten Lenkinformation, dessen Frequenzwert größer als ein zweiter vorgegebener Frequenzschwellenwert ist, charakterisiert; und
Bestimmung der Information über den Lenkwinkel des Vorderrades des Fahrzeugs zum aktuellen Zeitpunkt gemäß der ersten Zielinformation und der zweiten Zielinformation.

Die Einrichtung zur Bestimmung eines Lenkwinkels eines Vorderrades eines Fahrzeugs nach dem vorliegenden Ausführungsbeispiel kann das Verfahren nach den vorstehend beschriebenen Verfahrensausführungsbeispielen ausführen, wobei das Implementierungsprinzip und die technischen Effekte ähnlich sind und in dem vorliegenden Ausführungsbeispiel nicht mehr wiederholt werden.

Fig. 6 zeigt eine schematische Strukturdarstellung eines elektronischen Geräts nach einem Ausführungsbeispiel der vorliegenden Anmeldung. Wie in Fig. 6 gezeigt, umfasst ein elektronisches Gerät 60 nach dem vorliegenden Ausführungsbeispiel: mindestens einen Prozessor 601 und einen Speicher 602. Optional umfasst das Gerät 60 ferner eine Kommunikationskomponente 603. Dabei können der Prozessor 601, der Speicher 602 und die Kommunikationskomponente 603 über einen Bus 604 miteinander verbunden sein.

In einem spezifischen Implementierungsvorgang führt der mindestens eine Prozessor 601 die im Speicher 602 gespeicherten computerausführbaren Anweisungen aus, so dass der mindestens eine Prozessor 601 das vorstehend beschriebene Verfahren ausführt.

Der spezifische Implementierungsvorgang des Prozessors 601 kann auf das obige Verfahrensausführungsbeispiel verwiesen sein, dessen Implementierungsprinzipien und technische Auswirkungen ähnlich sind und hierbei im vorliegenden Ausführungsbeispiel nicht mehr wiederholt werden.

In dem obigen Ausführungsbeispiel ist es zu verstehen, dass der Prozessor eine zentrale Verarbeitungseinheit (Central Processing Unit, CPU) sein kann. Alternativ kann er ein anderer universaler Prozessor, ein digitaler Signalprozessor (Digital Signal Processor, DSP), eine anwendungsspezifische integrierte Schaltung (Application Specific Integrated Circuit, ASIC) usw. sein. Der universale Prozessor kann ein Mikroprozessor sein oder er kann unter anderem auch ein beliebiger herkömmlicher Prozessor sein. Die Schritte des im Zusammenhang mit der vorliegenden Erfindung offenbarten Verfahrens können unmittelbar durch einen Hardware-Prozessor vollständig durchgeführt werden oder mittels einer Kombination der Hardware mit Softwaremodulen im Prozessor durchgeführt werden.

Der Speicher kann einen Hochgeschwindigkeitsspeicher (Random Access Memory, RAM) und ferner einen nichtflüchtigen Speicher (Non-volatile Memory, NVM), beispielsweise mindestens einen Magnetplattenspeicher, umfassen.

Bei dem Bus kann es sich um einen Industry-Standard-Architecture (ISA)-Bus, einen Peripheral-Component-Interconnect (PCI)-Bus oder einen Extended-Industry-Standard-Architecture (EISA)-Bus usw. handeln. Die Busse können in einen Adressenbus, einen Datenbus, einen Steuerungsbus, usw. unterteilt werden. Zum Erleichtern der Darstellung sind die Busse in den Zeichnungen der vorliegenden Anmeldung nicht auf nur einen einzigen Bus oder eine einzige Art von Bussen beschränkt.

Durch die vorliegende Anmeldung wird ferner ein Computerprogrammprodukt bereitgestellt, das ein Computerprogramm umfasst, das bei seinem Ausführen durch einen Prozessor das obige Verfahren implementiert.

Durch die vorliegende Anmeldung wird ferner ein computerlesbares Speichermedium bereitgestellt, auf dem computerausführbare Anweisungen gespeichert sind. Wenn der Prozessor die computerausführbaren Anweisungen ausführt, kann das obige Verfahren implementiert werden.

Das oben erwähnte lesbare Speichermedium kann durch ein flüchtiges oder nichtflüchtiges Speichergerät eines beliebigen Typs, wie z. B. statisches Random-Access-Memory (SRAM), Electrically-Erasable-Programmable-Read-Only-Memory (EEPROM), Erasable-Programmable-Read-Only-Memory (EPROM), Programmable-Read-Only-Memory (PROM), Read-Only-Memory (ROM), magnetischen Speicher, Flash-Speicher, Magnetdiskette oder optischen Disk, oder eine Kombination davon erzielt werden. Das lesbare Speichermedium kann ein beliebiges Medium sein, auf das von einem universellen oder dedizierten Computer zugegriffen werden kann.

Ein beispielhaftes lesbares Speichermedium kann mit einem Prozessor gekoppelt werden, so dass der Prozessor Informationen von dem lesbaren Speichermedium auslesen und darin Informationen schreiben kann. Selbstverständlich kann das lesbare Speichermedium auch ein Bestandteil des Prozessors sein. Der Prozessor und das lesbare Speichermedium können sich in einem anwendungsspezifischen integrierten Schaltkreis (Application Specific Integrated Circuit, ASIC) befinden. Selbstverständlich können der Prozessor und das lesbare Speichermedium auch als diskrete Komponenten in dem Gerät vorliegen.

Die Aufteilung der Einheiten stellt nur eine logische Funktionsteilung dar, wobei bei der tatsächlichen Implementierung andere Aufteilungsarten verwendbar sind, wobei beispielsweise mehrere Einheiten oder Komponenten miteinander kombinierbar oder in ein weiteres System integrierbar sind, oder wobei einige Merkmale weggelassen oder nicht durchgeführt werden können. Ferner können die angezeigten oder diskutierten gegenseitigen Kopplungen oder direkten Kopplungen oder Kommunikationsverbindungen eine indirekte Kopplung oder Kommunikationsverbindung über einige Schnittstellen, Einrichtungen oder Einheiten sein, und können elektrisch und mechanisch sein oder andere Formen annehmen.

Eine als separates Element erläuterte Einheit kann physikalisch getrennt oder physikalisch nicht getrennt sein, ein als Einheit angezeigtes Element kann eine physikalische Einheit oder keine physikalische Einheit sein, nämlich kann sie sich an einem Ort befinden oder auf mehreren Netzwerkeinheiten verteilt sein. Einige oder alle Einheiten darunter können gemäß den tatsächlichen Bedürfnissen ausgewählt werden, um den Zweck der Ausgestaltungen der vorliegenden Ausführungsbeispiele zu erzielen.

Außerdem können alle Funktionseinheiten in einzelnen Ausführungsbeispielen der vorliegenden Erfindung in eine Verarbeitungseinheit integriert sein, oder jede Funktionseinheit kann allein physisch existieren, oder zwei oder mehr als zwei der genannten Funktionseinheiten können in eine Einheit integriert sein.

Wenn die Funktion in Form einer Funktionseinheit der Software realisiert wird und als separates Produkt verkauft oder verwendet wird, kann sie in einem computerlesbaren Speichermedium gespeichert werden. Basierend auf diesem Verständnis kann ein wesentlicher Teil bzw. ein zum Stand der Technik beitragender Teil der technischen Lösung der vorliegenden Erfindung oder ein Teil dieser technischen Lösung in Form eines Softwareprodukts ausgeführt sein, das auf einem Speichermedium gespeichert ist und einige Anweisungen enthält, um ein Computergerät, das ein Personalcomputer, ein Server oder ein Netzwerkgerät usw. sein kann, zu veranlassen, alle oder einige Schritte des Verfahrens in verschiedenen Ausführungsbeispielen der vorliegenden Erfindung durchzuführen. Darüber hinaus umfasst das vorangehende Speichermedium: USB-Disk, Wechselfestplatte, Read-Only-Memory (ROM), Random-Access-Memory (RAM), Magnetplatte, optischen Disk, und verschiedene Medien, die Programmcodes speichern können.

Der Durchschnittsfachmann kann verstehen: Alle oder einige der Schritte für jeweilige oben beschriebene Verfahrensausführungsbeispiele können durch ein Programm über Anweisungen an relevante Hardware umgesetzt werden. Das vorangehende Programm kann in einem computerlesbaren Speichermedium gespeichert sein. Beim Ausführen des Programms werden Schritte, die die jeweiligen oben beschriebenen Verfahrensausführungsbeispiele umfassen, ausgeführt. Darüber hinaus umfasst das vorangehende Speichermedium: ROM, RAM, Diskette oder optischen Disk und verschiedene andere Medien, in denen Programmcodes gespeichert werden können.

Abschließend sollte darauf hingewiesen sein, dass für die Fachleute nach dem Implementieren der hierin offenbarten Erfindung unter Berücksichtigung der Beschreibung auch andere Ausführungsmöglichkeiten der vorliegenden Erfindung naheliegend sind. Die vorliegende Anmeldung zielt darauf ab, jegliche Varianten, Verwendungen oder adaptive Änderungen der vorliegenden Erfindung abzudecken, und solche Varianten, Verwendungen oder adaptive Änderungen folgen den allgemeinen Prinzipien der vorliegenden Erfindung und umfassen allgemein bekanntes Fachwissen oder gewöhnliches technisches Mittel, das in der vorliegenden Erfindung nicht offenbart ist, auf diesem Gebiet. Die vorliegende Erfindung ist nicht auf die oben beschriebenen und in den Figuren dargestellten genauen Strukturen beschränkt und kann auf verschiedene Weisen modifiziert bzw. verändert werden, ohne von ihrem Umfang abzuweichen. Der Umfang der vorliegenden Erfindung ist lediglich durch die beigefügten Ansprüche definiert.

## Patentansprüche

1. Verfahren zur Bestimmung eines Lenkwinkels eines Vorderrades eines Fahrzeugs, **dadurch gekennzeichnet, dass** es umfasst:
Erfassung dynamischer Information und stationärer Information des Fahrzeugs zum aktuellen Zeitpunkt, wobei die dynamische Information ein Fahr- und Lenkverhalten des Fahrzeugs und die stationäre Information ein stationäres Gierverhalten des Fahrzeugs charakterisiert;
Bestimmung erster Lenkinformation des Fahrzeugs gemäß der dynamischen Information und Bestimmung zweiter Lenkinformation des Fahrzeugs gemäß der stationären Information, wobei die erste Lenkinformation und die zweite Lenkinformation jeweils einen geschätzten Lenkwinkel des Vorderrades des Fahrzeugs charakterisieren; und
Bestimmung von Information über einen Lenkwinkel des Vorderrades des Fahrzeugs zum aktuellen Zeitpunkt gemäß der ersten Lenkinformation und der zweiten Lenkinformation.

2. Verfahren nach Anspruch 1, **dadurch gekennzeichnet, dass** die Bestimmung der ersten Lenkinformation des Fahrzeugs gemäß der dynamischen Information umfasst:
Bestimmung eines Vorhersagewerts des Lenkwinkels des Fahrzeugs gemäß der dynamischen Information mittels eines vorgegebenen künstlichen Intelligenzmodells, wobei es sich bei dem vorgegebenen künstlichen Intelligenzmodell um ein vorab erstelltes neuronales Netzwerkmodell handelt und zur Vorhersage des Lenkwinkels des Vorderrades des Fahrzeugs gemäß der dynamischen Information dient; und
Bestimmung der ersten Lenkinformation des Fahrzeugs gemäß der dynamischen Information und dem Vorhersagewert des Lenkwinkels.

3. Verfahren nach Anspruch 2, **dadurch gekennzeichnet, dass** die Bestimmung der ersten Lenkinformation des Fahrzeugs gemäß der dynamischen Information und dem Vorhersagewert des Lenkwinkels umfasst:
Erfassung eines ersten vorgegebenen Lenkwinkelmodells und eines zweiten vorgegebenen Lenkwinkelmodells, wobei das erste vorgegebene Lenkwinkelmodell eine Funktionsbeziehung zwischen der dynamischen Information und dem Lenkwinkel des Vorderrades und das zweite vorgegebene Lenkwinkelmodell eine Funktionsbeziehung zwischen der dynamischen Information, dem Vorhersagewert des Lenkwinkels und dem Lenkwinkel des Vorderrades charakterisiert; und
Bestimmung der ersten Lenkinformation des Fahrzeugs gemäß der dynamischen Information, dem Vorhersagewert des Lenkwinkels, dem ersten vorgegebenen Lenkwinkelmodell und dem zweiten vorgegebenen Lenkwinkelmodell mittels eines vorgegebenen Algorithmus eines erweiterten Kalman-Filters.

4. Verfahren nach Anspruch 3, **dadurch gekennzeichnet, dass** das erste vorgegebene Lenkwinkelmodell als Folgendes charakterisiert ist: $\left[\begin{matrix}{\dot{v}}_{y} \\ {\dot{w}}_{z} \\ {\dot{δ}}_{f} \\ {{δ}^{¨}}_{f} \\ {\dot{δ}}_{r}\end{matrix}\right] = \left[\begin{matrix}- \frac{{C}_{f} + {C}_{r}}{{mv}_{x}} - \frac{{C}_{f} {L}_{f} - {C}_{r} {L}_{r}}{{mv}_{x}} - {v}_{x} \frac{{C}_{f}}{m} 0 \frac{{C}_{r}}{m} \\ - \frac{{C}_{f} {L}_{f} - {C}_{r} {L}_{r}}{{J}_{z} {v}_{x}} - \frac{{C}_{f} {L}_{f}^{2} + {C}_{r} {L}_{r}^{2}}{{J}_{z} {v}_{x}} \frac{{C}_{r}}{{J}_{z}} \times {L}_{f} 0 \frac{{C}_{r}}{{J}_{z}} \times {L}_{r} \\ 0 0 0 1 0 \\ \frac{{C}_{f} {L}_{x}}{{J}_{s} {v}_{x}} \frac{{C}_{f} {L}_{f} {L}_{x}}{{J}_{s} {v}_{x}} - \frac{{C}_{f} {L}_{x}}{{J}_{s}} - \frac{{B}_{s}}{{J}_{s}} 0 \\ 0 0 0 0 0\end{matrix}\right] \left[\begin{matrix}{v}_{y} \\ {w}_{z} \\ {δ}_{f} \\ {\dot{δ}}_{f} \\ {δ}_{r}\end{matrix}\right] + \left[\begin{matrix}0 & 0 \\ \frac{{W}_{f}}{2 {J}_{z}} & \frac{{W}_{r}}{2 {J}_{z}} \\ 0 & 0 \\ \frac{{L}_{y}}{{J}_{s}} & 0 \\ 0 & 0\end{matrix}\right] \left[\begin{matrix}{ΔF}_{f \times b} - {ΔF}_{f \times d} \\ {ΔF}_{r \times b} - {ΔF}_{r \times d}\end{matrix}\right] ;$ wobei v_{y} die Quergeschwindigkeit des Fahrzeugs, v̇_{y} die zeitliche Ableitung der Quergeschwindigkeit, w_{z} die Gierrate, ẇ_{z} die Gierbeschleunigung, δ_{f} den Lenkwinkel des Vorderrades, δ̇_{f} die Winkelgeschwindigkeit des Vorderrades, *δ̈_{f}* die Winkelbeschleunigung des Vorderrades, den Lenkwinkel eines Hinterrades, δ̇ᵣ die Winkelgeschwindigkeit des Hinterrades, m die Masse des Fahrzeugs, vₓ die Längsgeschwindigkeit des Fahrzeugs, C_{f} die Seitensteifigkeit einer Vorderachse, Cᵣ die Seitensteifigkeit einer Hinterachse, L_{f} den Abstand vom Schwerpunkt zur Vorderachse, Lᵣ den Abstand vom Schwerpunkt zur Hinterachse, J_{z} das Trägheitsmoment des Fahrzeugs um eine Z-Achse, Lₓ die Schleppweite, Bₛ die Dämpfung eines vorderen Lenksystems, Jₛ das Trägheitsmoment des vorderen Lenksystems, W_{f} die Spurweite der Vorderachse, Wᵣ die Spurweite der Hinterachse, L_{y} den Lenkrollradius, ΔF_{fxb} den Differenzwert der Bremskräfte auf der linken und rechten Seite der Vorderachse, ΔF_{fxd} den Differenzwert der Antriebskräfte auf der linken und rechten Seite der Vorderachse, ΔF_{rxb} den Differenzwert der Bremskräfte auf der linken und rechten Seite der Hinterachse und ΔF_{rxd} den Differenzwert der Antriebskräfte auf der linken und rechten Seite der Hinterachse charakterisiert.

5. Verfahren nach Anspruch 3, **dadurch gekennzeichnet, dass** das zweite vorgegebene Lenkwinkelmodell als Folgendes charakterisiert ist: $\left[\begin{matrix}{a}_{y} \\ {w}_{z} \\ {δ}_{f}^{∗} \\ {δ}_{r}\end{matrix}\right] = \left[\begin{matrix}- \frac{{C}_{f} + {C}_{r}}{{mv}_{x}} - \frac{{C}_{f} {L}_{f} - {C}_{r} {L}_{r}}{{mv}_{x}} \frac{{C}_{f}}{m} 0 \frac{{C}_{r}}{m} \\ 0 1 0 0 0 \\ 0 0 1 0 0 \\ 0 0 0 0 1\end{matrix}\right] \left[\begin{matrix}{v}_{y} \\ {w}_{z} \\ {δ}_{f} \\ {\dot{δ}}_{f} \\ {δ}_{r}\end{matrix}\right] ;$ wobei v_{y} die Quergeschwindigkeit des Fahrzeugs, w_{z} die Gierrate, δ_{f} den Lenkwinkel des Vorderrades, δ̇_{f} die Winkelgeschwindigkeit des Vorderrades, δᵣ den Lenkwinkel des Hinterrades, ${δ}_{f}^{∗}$ den Vorhersagewert des Lenkwinkels, m die Masse des Fahrzeugs, vₓ die Längsgeschwindigkeit des Fahrzeugs, C_{f} die Seitensteifigkeit der Vorderachse, Cᵣ die Seitensteifigkeit der Hinterachse, L_{f} den Abstand vom Schwerpunkt zur Vorderachse, Lᵣ den Abstand vom Schwerpunkt zur Hinterachse und a_{y} die Querbeschleunigung charakterisiert.

6. Verfahren nach Anspruch 3, **dadurch gekennzeichnet, dass** die dynamische Information den Schiebewinkel und die Gierrate umfasst; und dass die Bestimmung der ersten Lenkinformation des Fahrzeugs gemäß der dynamischen Information, dem Vorhersagewert des Lenkwinkels, dem ersten vorgegebenen Lenkwinkelmodell und dem zweiten vorgegebenen Lenkwinkelmodell mittels eines Algorithmus eines erweiterten Kalman-Filters umfasst:
Bestimmung des Messrauschens des Fahrzeugs gemäß dem Schiebewinkel und der Gierrate, wobei das Messrauschen die Zuverlässigkeit des Vorhersagewerts des Lenkwinkels charakterisiert; und
Bestimmung der ersten Lenkinformation des Fahrzeugs gemäß dem Messrauschen, der dynamischen Information, dem Vorhersagewert des Lenkwinkels, dem ersten vorgegebenen Lenkwinkelmodell und dem zweiten vorgegebenen Lenkwinkelmodell mittels des Algorithmus des erweiterten Kalman-Filters.

7. Verfahren nach Anspruch 1, **dadurch gekennzeichnet, dass** die Bestimmung der zweiten Lenkinformation des Fahrzeugs gemäß der stationären Information umfasst:
Erfassung eines dritten vorgegebenen Lenkwinkelmodells, wobei das dritte vorgegebene Lenkwinkelmodell eine Funktionsbeziehung zwischen der stationären Information und dem Lenkwinkel des Vorderrades charakterisiert, und wobei die stationäre Information mindestens eine von der Gierrate, der Längsgeschwindigkeit des Fahrzeugs und der charakteristischen Fahrzeuggeschwindigkeit umfasst; und
Bestimmung der zweiten Lenkinformation des Fahrzeugs gemäß der stationären Information und dem dritten vorgegebenen Lenkwinkelmodell mittels einer vorgegebenen rekursiven Kleinste-Quadrate-Methode.

8. Verfahren nach Anspruch 7, **dadurch gekennzeichnet, dass** das dritte vorgegebene Lenkwinkelmodell als Folgendes charakterisiert ist: ${w}_{z} = \frac{{v}_{x}}{L \times \left(1+{\left(\frac{{v}_{x}}{{v}_{cx}}\right)}^{2}\right)} {δ}_{f} ;$ wobei w_{z} die Gierrate, L den Radstand des Fahrzeugs, vₓ die Längsgeschwindigkeit, v_{cx} die charakteristische Fahrzeuggeschwindigkeit und δ_{f} den Lenkwinkel des Vorderrades charakterisiert.

9. Verfahren nach einem der Ansprüche 1 bis 8, **dadurch gekennzeichnet, dass** die Bestimmung von Information über einen Lenkwinkel des Vorderrades des Fahrzeugs zum aktuellen Zeitpunkt gemäß der ersten Lenkinformation und der zweiten Lenkinformation umfasst:
Herausfilterung erster Zielinformation aus der ersten Lenkinformation mittels eines vorgegebenen Tiefpassfilters, wobei die erste Zielinformation ein Signal in der ersten Lenkinformation, dessen Frequenzwert kleiner als ein erster vorgegebener Frequenzschwellenwert ist, charakterisiert;
Herausfilterung zweiter Zielinformation aus der zweiten Lenkinformation mittels eines vorgegebenen Hochpassfilters, wobei die zweite Zielinformation ein Signal in der zweiten Lenkinformation, dessen Frequenzwert größer als ein zweiter vorgegebener Frequenzschwellenwert ist, charakterisiert; und
Bestimmung der Information über den Lenkwinkel des Vorderrades des Fahrzeugs zum aktuellen Zeitpunkt gemäß der ersten Zielinformation und der zweiten Zielinformation.

10. Einrichtung zur Bestimmung eines Lenkwinkels eines Vorderrades eines Fahrzeugs, **dadurch gekennzeichnet, dass** sie umfasst:
eine Informationserfassungseinheit, die zur Erfassung dynamischer Information und stationärer Information des Fahrzeugs zum aktuellen Zeitpunkt dient, wobei die dynamische Information ein Fahr- und Lenkverhalten des Fahrzeugs und die stationäre Information ein stationäres Gierverhalten des Fahrzeugs charakterisiert;
eine Lenkbestimmungseinheit, die zur Bestimmung erster Lenkinformation des Fahrzeugs gemäß der dynamischen Information und Bestimmung zweiter Lenkinformation des Fahrzeugs gemäß der stationären Information dient, wobei die erste Lenkinformation und die zweite Lenkinformation jeweils einen geschätzten Lenkwinkel des Vorderrades des Fahrzeugs charakterisieren; und
eine Lenkwinkelbestimmungseinheit, die zur Bestimmung von Information über einen Lenkwinkel des Vorderrades des Fahrzeugs zum aktuellen Zeitpunkt gemäß der ersten Lenkinformation und der zweiten Lenkinformation dient.

11. Elektronisches Gerät, **dadurch gekennzeichnet, dass** es umfasst: einen Speicher und einen Prozessor,
wobei in dem Speicher computerausführbare Anweisungen gespeichert sind,
und wobei der Prozessor die in dem Speicher gespeicherten computerausführbaren Anweisungen ausführt, um das Durchführen eines Verfahrens nach einem der Ansprüche 1 bis 9 durch den Prozessor zu ermöglichen.

12. Computerlesbares Speichermedium, **dadurch gekennzeichnet, dass** in dem computerlesbaren Speichermedium computerausführbare Anweisungen gespeichert sind, die bei ihrem Ausführen durch einen Prozessor zur Implementierung eines Verfahrens nach einem der Ansprüche 1 bis 9 verwendet werden.

13. Computerprogrammprodukt, **dadurch gekennzeichnet, dass** es ein Computerprogramm umfasst, das bei seinem Ausführen durch einen Prozessor das Verfahren nach einem der Ansprüche 1 bis 9 implementiert.
